# EUROPEAN PATENT APPLICATION

(11) **EP 4 589 587 A1**
(43) Date of publication of application: **23.07.2025**
(21) Application number: 23880169.0
(22) Date of filing: 17.10.2023
(51) Int. Cl.: G10L 15/22, G10L 15/04, G10L 15/18, G10L 15/14, G01S 15/06

(54) **ELECTRONIC DEVICE AND SPEECH ASSISTANT SERVICE PROVIDING METHOD OF ELECTRONIC DEVICE**

(30) Priority: 19.10.2022 KR 20220134864; 09.12.2022 KR 20220171982
(71) Applicant: Samsung Electronics Co., Ltd., Suwon-si, Gyeonggi-do 16677 (KR)
(72) Inventor: CHEON, Hyunju, Suwon-si Gyeonggi-do 16677 (KR); OH, Hyunsuk, Suwon-si Gyeonggi-do 16677 (KR)
(74) Representative: HGF
(86) International application number: PCT/KR2023/016022
(87) International publication number: WO 2024/085592

(57) **Abstract**

According to an embodiment disclosed in the specification, an electronic device may include a communication circuit, a memory, and a processor. The processor may be configured to receive a voice input corresponding to a user utterance from a first external device through the communication circuit, to identify, from the voice input, a session corresponding to the user utterance, user intent, and information related to at least one second external device related to an operation corresponding to the user intent, to update at least one of the user intent and the information related to the at least one second external device based on context information related to a stored user utterance history, to generate a command for executing the operation based on the user intent and the information related to the at least one second external device, and to update the context information based on the session, the user intent, and the information related to the at least one second external device. Besides, other various embodiments identified through the specification are also possible.

## Description

### [TECHNICAL FIELD]

Embodiments disclosed in this specification relate to a technology for providing a voice assistance service.

### [BACKGROUND ART]

Nowadays, with the development of a speech recognition technology, a speech recognition function may be implemented in various electronic devices including microphones. For example, a voice assistance service capable of providing an intuitive interface between electronic devices has recently been developed. The voice assistance service may infer a user's intent by performing natural language processing on the user's utterance, and may allow a control device to be controlled based on the inferred intent of the user.

### [DETAILED DESCRIPTION OF THE INVENTION]

### [TECHINICAL PROBLEM]

In providing a voice assistant service, when user utterances are entered continuously, it is difficult to perform a function in conjunction with a previous user utterance or to provide a voice assistant service for a new utterance by using the previous user utterance.

Various embodiments of the disclosure aim to provide an electronic device and a method that may increase the accuracy, performance and efficiency of a voice assistant service based on a previous user utterance and context information related to the previous user utterance when consecutive user utterances are entered.

The technical problems to be solved in this specification are not limited to the aforementioned problem, and other technical problems that are not mentioned will be clearly understood by those skilled in the art, to which the disclosure pertains, from the following description.

### [TECHNICAL SOLUTION]

According to an embodiment disclosed in the specification, an electronic device may include a communication circuit, a memory, and a processor. The processor may be configured to receive a voice input corresponding to a user utterance from a first external device through the communication circuit, to identify, from the voice input, a session corresponding to the user utterance, user intent, and information related to at least one second external device related to an operation corresponding to the user intent, to update at least one of the user intent and the information related to the at least one second external device based on context information related to a stored user utterance history, to generate a command for executing the operation based on the user intent and the information related to the at least one second external device, and to update the context information based on the session, the user intent, and the information related to the at least one second external device.

According to an embodiment disclosed in the specification, a method may include receiving a voice input corresponding to a user utterance from a first external device, recognizing, from the voice input, a session corresponding to the user utterance, user intent, and information related to at least one second external device related to an operation corresponding to the user intent, updating at least one of the user intent and the information related to the at least one second external device based on context information related to a stored user utterance history, generating a command for executing the operation based on the user intent and the information related to the at least one second external device, and updating the context information based on the session, the user intent, and the information related to the at least one second external device.

According to an embodiment disclosed in the specification, a storage medium may store a program (or instructions) that, when executed by a processor of an electronic device, causes the electronic device to receive a voice input corresponding to a user utterance from a first external device through the communication circuit, to identify, from the voice input, a session corresponding to the user utterance, user intent, and information related to at least one second external device related to an operation corresponding to the user intent, to update at least one of the user intent and the information related to the at least one second external device based on context information related to a stored user utterance history, to generate a command for executing the operation based on the user intent and the information related to the at least one second external device, and to update the context information based on the session, the user intent, and the information related to the at least one second external device.

### [ADVANTAGEOUS EFFECTS OF THE INVENTION]

According to embodiments disclosed in the specification, the accuracy, performance, and efficiency of a voice assistant service may increase based on a previous user utterance and context information related to the previous user utterance when consecutive user utterances are entered.

Furthermore, a variety of effects directly or indirectly understood through the disclosure may be provided.

Effects obtained in the disclosure are not limited to the above-mentioned effects, and other effects that are not mentioned will be clearly understood by those skilled in the art, to which the disclosure belongs, from the following description.

### [DESCRIPTION OF THE DRAWINGS]

FIG. 1 shows a system block diagram providing a voice assistant service.
FIG. 2 is a drawing for describing an operation of an electronic device, according to an embodiment.
FIG. 3 is a drawing for describing an operation of an electronic device, according to an embodiment.
FIG. 4 is a drawing for describing an operation of an electronic device, according to an embodiment.
FIG. 5 is a drawing for describing an operation of an electronic device, according to an embodiment.
FIG. 6 is a drawing for describing an operation of an electronic device, according to an embodiment.
FIG. 7 is a drawing for describing an operation of an electronic device, according to an embodiment.
FIG. 8 is a drawing for describing an operation of an electronic device, according to an embodiment.
FIG. 9 is a drawing for describing an operation of an electronic device, according to an embodiment.
FIG. 10 is a drawing for describing an operation of an electronic device, according to an embodiment.
FIG. 11 is a block diagram of an electronic device, according to an embodiment.
FIG. 12 is a flowchart of a method for providing a voice assistant service of an electronic device, according to an embodiment.
FIG. 13 is a flowchart of a method for providing a voice assistant service of an electronic device, according to an embodiment.
FIG. 14 illustrates an electronic device in a network environment, according to various embodiments.
FIG. 15 is a block diagram illustrating an integrated intelligence system, according to an embodiment.
FIG. 16 is a diagram illustrating the form in which relationship information between a concept and an action is stored in a database, according to an embodiment.
FIG. 17 is a view illustrating a user terminal displaying a screen of processing a voice input received through an intelligent app, according to an embodiment.

With regard to description of drawings, the same or similar components will be marked by the same or similar reference signs.

### [BEST MODE]

Hereinafter, an embodiment of the disclosure will be described more fully with reference to the accompanying drawings to such an extent as to be easily embodied by one skilled in the art. However, the disclosure may be embodied in many different forms and should not be construed as limited to the embodiments set forth herein. With regard to description of drawings, the same or similar components will be marked by the same or similar reference signs. Moreover, in the drawings and related descriptions, descriptions of well-known functions and configurations may be omitted for clarity and conciseness.

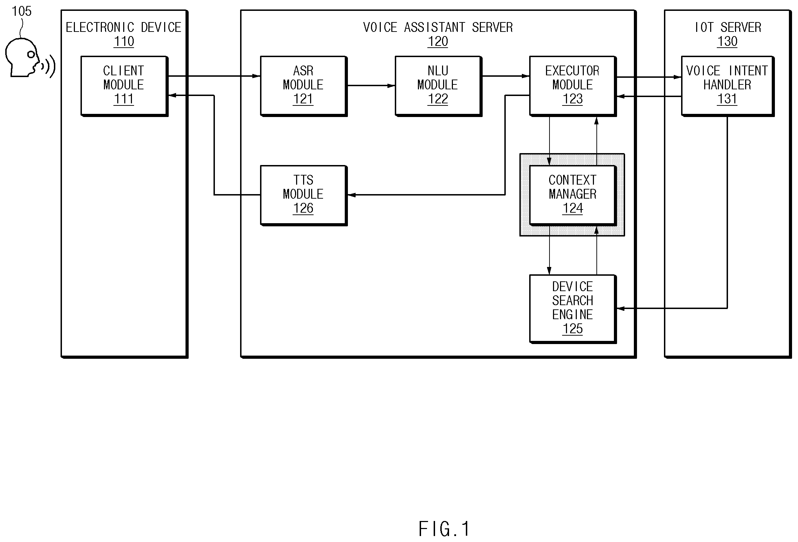

FIG. 1 shows a system block diagram providing a voice assistant service.

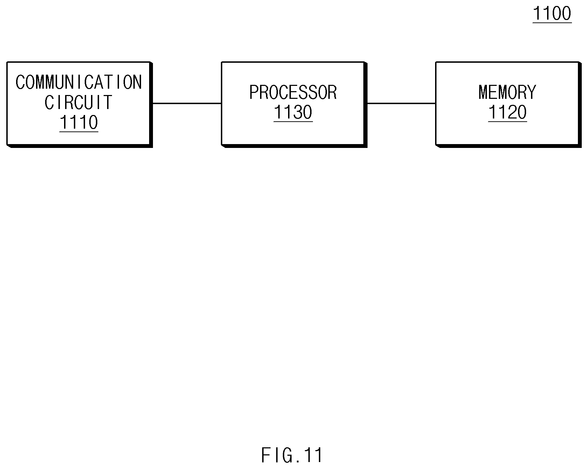

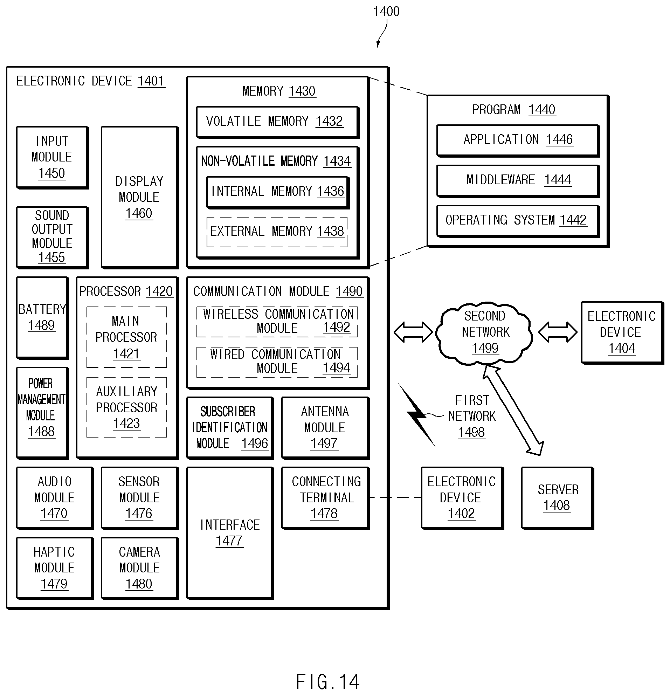

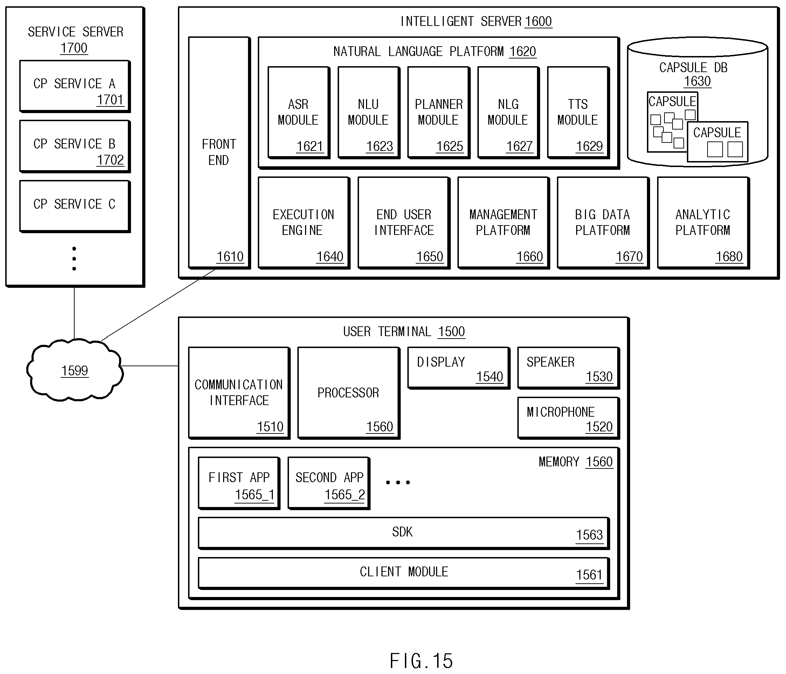

According to an embodiment, a voice assistant system may include an electronic device 110 (e.g., an electronic device 1401 of FIG. 14 or a user terminal 1501 of FIGS. 15 to 17), a voice assistant server 120 (e.g., an electronic device 1100 of FIG. 11, a server 1408 of FIG. 14, or an intelligent server 1600 of FIG. 15) and an loT server 130 (e.g., the server 1408 of FIG. 14 or a service server 1700 of FIG. 15).

According to an embodiment, the electronic device 110 may include a client module 111 (e.g., a client module 1531 of FIG. 15). According to an embodiment, the client module 111 may provide a speech recognition service for an utterance of a user 105. The client module 111 may obtain a natural language input. The natural language input may include a text input and/or a voice input (e.g., user utterance). For example, the client module 111 may receive a voice input (or voice signal) (e.g., a user utterance) through an input device (e.g., a microphone) (not shown) of the electronic device 110. The client module 111 may determine the start of a conversation (or a session) based on an event that the natural language input is obtained. The client module 111 may determine the start of the conversation based on an event that the specified natural language input (e.g., a wakeup utterance) is obtained. The client module 111 may determine the end of the conversation based on an event that the natural language input is not obtained during a specified time. The client module 111 may determine the end of the conversation based on an event that the natural language input for requesting the end of a conversation is obtained. In an embodiment, an interval from the beginning of the conversation to the end of the conversation may be referred to as a "voice session" (hereinafter referred to as a 'session'). For example, a series of consecutive user utterances starting from the first user utterance may become a single conversation, and the conversation may be organized in units of session.

The client module 111 may transmit a voice input to the voice assistant server 120. The client module 111 may receive a result corresponding to the voice input from the voice assistant server 120. The client module 111 may notify the voice assistant server 120 of the start of the conversation. The client module 111 may notify the voice assistant server 120 of the end of the conversation. For example, the client module 111 may transmit and receive data and/or information with an external device (e.g., the voice assistant server 120) by using a communication circuit (e.g., a communication module 1490 of FIG. 14 or a communication interface 1590 of FIG. 15) of the electronic device 110.

The client module 111 may provide the user with information indicating a result. For example, the client module 111 may provide the user with information visually or audibly indicating a result. For example, the client module 111 may output a result through a speaker (e.g., a sound output module 1455 of FIG. 14 or a speaker 1555 of FIG. 15) of the electronic device 110, or may output a result through a display (e.g., a display module 1460 of FIG. 14 or a display 1560 of FIG. 15) of the electronic device 110.

According to an embodiment, a configuration of the electronic device 110 is not limited to that shown in FIG. 1, and may further include at least one configuration (e.g., at least one of the configurations of the electronic device 1401 of FIG. 14 or the user terminal 1501 of FIG. 15).

According to an embodiment, the voice assistant server 120 may include an auto speech recognition (ASR) module 121 (e.g., an ASR module 1621 of FIG. 15), a natural language understanding (NLU) module 122 (e.g., an NLU module 1623 of FIG. 15), an executor module 123 (e.g., an execution engine 1640 of FIG. 15), a context manager module 124, a device search engine module 125, and a text to speech (TTS) module 126 (e.g., an TTS module 1629 of FIG. 15).

According to an embodiment, the ASR module 121 may convert the voice input received from the electronic device 110 into text data.

According to an embodiment, the NLU module 122 may identify a user's intent (or user intent) by using the text data of the voice input.

According to an embodiment, the executor module 123 may calculate the result by executing a task according to the user's intent. For example, when the user's intent corresponds to the control of internet of things (IoT) devices, the executor module 123 may send a command (e.g., an execution request) for controlling the loT devices to the loT server 130. For example, when the user's intent corresponds to a check of the current time, the executor module 123 may execute an instruction for identifying the current time. The executor module 123 may receive, from the loT server 130, the result (e.g., an execution response) obtained as the loT device performs an operation.

The executor module 123 may provide the electronic device 110 with feedback (e.g., feedback corresponding to an execution response) according to a voice input. For example, the executor module 123 may generate information in a text form for feedback. The executor module 123 may generate information in the text form indicating the calculated result. For example, when the user's intent corresponds to the control of the loT device, the calculated result may be the control result of the loT device. As another example, when the user's intent corresponds to a check of the current time, the calculated result may be the current time.

The executor module 123 may receive information of a device (hereinafter referred to as an 'execution device') that will perform an operation corresponding to the user intent and/or a user utterance updated through the context manager 124. For example, the executor module 123 may obtain information related to the user utterance (e.g., user intent, execution device information, session information, timestamp information, and/or location information) from the context manager 124. The executor module 123 may transmit, to the loT server 130, a request for allowing an execution device to perform an operation corresponding to the user utterance based on information related to the user utterance. For example, the executor module 123 may determine a voice command based on information related to the user utterance and may transmit an execution request including the voice command to the loT server 130. The executor module 123 may receive an execution response to the execution request from the loT server 130. The execution response may include information about the result obtained as an IoT device (an execution device) managed by the loT server 130 performs at least some of operations corresponding to the user utterance depending on the execution request. According to an embodiment, when the executor module 123 is incapable of accurately specifying a device (e.g., execution device) that will perform an operation corresponding to the user intent based on information received from the context manager 124 and/or the device search engine 125, the executor module 123 may allow the electronic device 110 to output a message (e.g., a prompt message) for prompting an additional user utterance for specifying a device that will perform an operation corresponding to the user intent.

According to an embodiment, the context manager 124 may receive information (e.g., user intent, execution device information, session information, timestamp information, and/or location information) related to the user utterance from the executor module 123. The context manager 124 may receive information of at least one IoT device from a device search module. For example, the context manager 124 may transmit information related to the user utterance to the device search module and may receive information about an loT device found based on the information related to the user utterance from the device search module. The context manager 124 may update information related to user intent, and at least one IoT device (e.g., at least one execution device that will perform an operation corresponding to the user intent) related to an operation corresponding to the user intent based on context information (in the specification, referred to as a "context database") related to a pre-stored user utterance history, and may provide the updated information to the executor module 123. For example, context information may include information related to the previous user utterance (e.g., session information, execution device information, intent information, timestamp information, and/or location information). For example, when the context manager 124 receives information about pieces of candidate intent and/or information about a plurality of candidate loT devices that will perform an operation corresponding to user intent from the device search engine 125, the context manager 124 may specify at least one loT device (i.e., an execution device) that will perform an operation corresponding to the user intent based on the context information, and/or intent. The context manager 124 may provide the executor module 123 with information and/or intent of at least one specific loT device.

According to an embodiment, the context manager 124 may receive an execution response (e.g., the result of performing an operation corresponding to user intent) from the executor module 123 and may update the context information based on the execution response. For example, the context manager 124 may store a user utterance history (e.g., a session, an execution device, intent, a timestamp, and/or location information related to the user utterance) in the context information.

According to an embodiment, the device search engine 125 may search for a device that will perform an operation corresponding to a user utterance, based on information about an IoT device obtained from the loT server 130. For example, the device search engine 125 may search for at least one IoT device that will perform an operation corresponding to the user utterance and/or intent corresponding to a function capable of being performed by the loT device, based on information (e.g., user intent, execution device information, session information, timestamp information, and/or location information) related to the user utterance. For example, the device search engine 125 may search for information of at least one candidate loT device that will perform an operation corresponding to user intent and/or information of at least one candidate intent, and may provide the search result to the context manager 124.

According to an embodiment, the TTS module 126 may change information in a text form into information in a voice form. The TTS module 126 may provide the information in a voice form to the electronic device 110.

According to an embodiment, the loT server 130 may include a voice intent handler 131. The loT server 130 may be connected to at least one IoT device to control the operation and/or status of the loT device. The voice intent handler 131 may identify an loT device to be controlled among a plurality of loT devices based on intent identified by a voice input (e.g., a user utterance) and may control the identified loT device based on the intent. For example, the voice intent handler 131 may perform an operation in response to an execution request received from the executor module 123. For example, the voice intent handler 131 may allow an IoT device corresponding to the execution request to perform an operation corresponding to a user utterance.

The voice intent handler 131 may identify the result (e.g., the result of the loT device performing an operation corresponding to a user utterance) of controlling the loT device and may provide an execution response to the executor module 123 based on the result. According to an embodiment, the voice intent handler 131 may provide the device search module with information about IoT devices managed by the loT server 130.

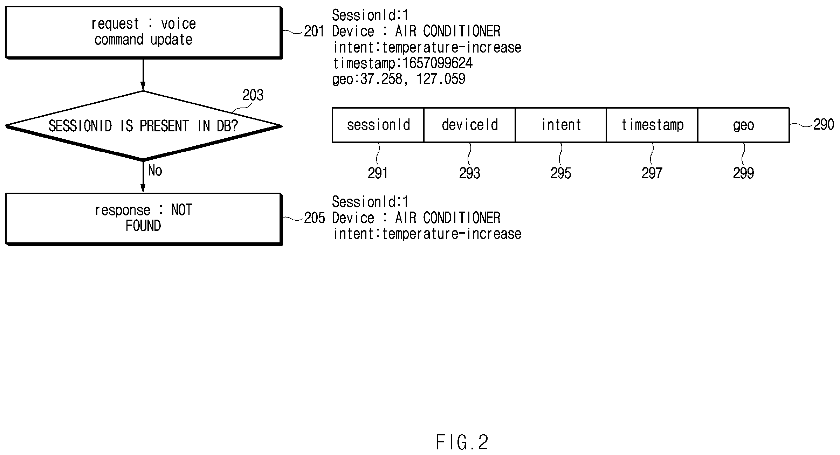

FIG. 2 is a drawing for describing an operation of an electronic device, according to an embodiment. FIG. 2 shows a case where there is no pre-stored context information (e.g., there is no user utterance history in the context information).

According to an embodiment, in operation 201, an electronic device (e.g., the voice assistant server 120 of FIG. 1, the electronic device 1100 of FIG. 11, the server 1408 of FIG. 14, or the intelligent server 1600 of FIG. 15) may receive a voice input corresponding to a first user utterance (e.g., "turn up the air conditioner temperature") from an external device (e.g., the electronic device 1401 of FIG. 14 or the user terminal 1501 of FIGS. 15 to 17). The electronic device may identify a session (session Id), an execution device (device), intent, a timestamp, and a location related to the first user utterance based on the voice input. For example, the electronic device may identify session 1, air conditioner, temperature-increase, 1657099624, and "37.258, 127.059". For example, a timestamp may represent a user utterance time, and a location may represent a location (e.g., a location of a receiving device receiving the user utterance) where a user utterance is received. The execution device (device) may represent a specific execution device itself or a type of an execution device. For example, the timestamp may include a unix timestamp value. The unix timestamp value may be a method of tracking a time in units of second, and may be a value representing a time starting on January 1, 1970 at 0:00 Universal Time Coordinated (UTC). The unix timestamp value may have a time value that does not change depending on a location because it is measured on substantially the same basis everywhere. The location may include a latitude value and a longitude value. For example, the electronic device may determine a voice command based on information related to the identified user utterance, by analyzing a voice input. The electronic device may attempt to update the voice command determined by analyzing the voice input based on pre-stored context information 290. For example, the electronic device may attempt to update at least some of information associated with a first user utterance based on the pre-stored context information 290.

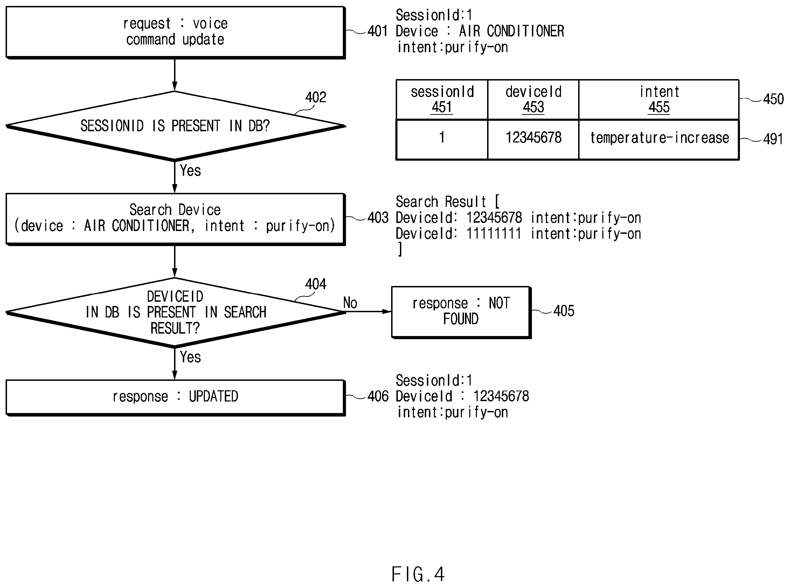

In operation 203, the electronic device may identify the context information 290 related to the previous user utterance history. For example, the context information 290 may include the history of a previous user utterance (e.g., session information (session Id) 291, execution device information (device Id) 293, intent information (intent) 295, timestamp information (timestamp) 297, and/or location information (geo) 299 related to the previous user utterances). The electronic device may determine whether the previous user utterance history is present in the context information 290. Because FIG. 2 shows that there is no previous user utterance history in the context information 290, the electronic device may identify that there is no previous user utterance belonging to the same session in the context information 290. When there is no previous user utterance history in the context information 290, the electronic device may perform operation 205. The case where the previous user utterance history is present in the context information 290 will be specifically described below with reference to FIG. 4.

In operation 205, the electronic device may determine a final voice command in response to recognizing that there is no user utterance history in the context information 290 (not found). For example, the electronic device may not update the voice command determined based on an initial voice input. For example, the electronic device may maintain session information (session 1), execution device (air conditioner), and intent (temperature-increase) information related to the first user utterance identified in operation 201.

The electronic device may transmit the voice command determined based on information related to the first user utterance to an IoT server (e.g., a voice intent handler (VIH)) (e.g., the loT server 130 of FIG. 1). The voice command may include a session, an execution device, and/or intent information. The loT server may control at least one IoT device based on a voice command received from the electronic device. For example, the loT server may control an execution device (e.g., an air conditioner) to perform an operation (e.g., increase a temperature) corresponding to intent (temperature-increase).

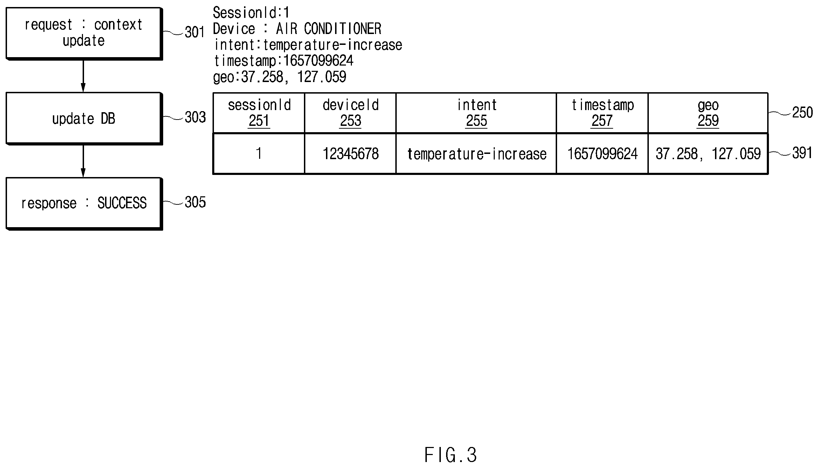

According to an embodiment, at least some of the operations of FIG. 2 may be omitted, or at least one other operation (e.g., at least some of the operations of FIGS. 3 to 9, 12, or 13) may be added, and the order of at least some of the operations may be changed.

FIG. 3 is a drawing for describing an operation of an electronic device, according to an embodiment. FIG. 3 shows an operation of updating context information.

In operation 301, an electronic device (e.g., the voice assistant server 120 of FIG. 1, the electronic device 1100 of FIG. 11, the server 1408 of FIG. 14, or the intelligent server 1600 of FIG. 15) may attempt to update context information 250. For example, the electronic device may identify information (a session, an execution device, intent, a timestamp, and/or location information) 391 related to a user utterance (e.g., a first user utterance). For example, an electronic device may identify "session 1", "air conditioner", "temperature-increase", "1657099624", and "37.258, 127.059".

In operation 303, the electronic device may update the context information 250 (e.g., context database). For example, the electronic device may store, in the context information 250, information (i.e., a user utterance history) 391 related to a user utterance identified in operation 301. For example, the electronic device may store a session identification number (e.g., 1), an execution device identification number (e.g., the identification number of the air conditioner is 12345678), intent (e.g., temperature-increase), a timestamp (e.g., 1657099624), and a location (e.g., 37.258, 127.059) in the context information 250.

In operation 305, the electronic device may identify that the update of the context information 250 is completed (successfully) and may terminate the update of the context information 250.

According to an embodiment, at least some of the operations of FIG. 3 may be omitted, or at least one other operation (e.g., at least some of the operations of FIGS. 2, 4 to 9, 12, or 13) may be added, and the order of at least some of the operations may be changed.

FIG. 4 is a drawing for describing an operation of an electronic device, according to an embodiment. FIG. 4 shows that a previous user utterance history belonging to the same session as a current user utterance is present in context information. Hereinafter, any content overlapping the description of FIG. 2 or 3 is briefly described or omitted.

According to an embodiment, in operation 401, an electronic device (e.g., the voice assistant server 120 of FIG. 1, the electronic device 1100 of FIG. 11, the server 1408 of FIG. 14, or the intelligent server 1600 of FIG. 15) may receive a voice input corresponding to a current first user utterance (e.g., "turn up the air purification of an air conditioner") from a first external device (e.g., the electronic device 1401 of FIG. 14 or the user terminal 1501 of FIGS. 15 to 17). The electronic device may identify a session (session Id), an execution device (device), and intent related to the first user utterance based on the voice input. For example, the electronic device may identify "session 1", "air conditioner", and "purify-on". The electronic device may determine a voice command based on information identified by analyzing the voice input. The electronic device may attempt to update the voice command determined by analyzing the voice input based on pre-stored context information 450.

In operation 402, the electronic device may determine whether a previous user utterance history (e.g., a second user utterance history 491) belonging to the same session as the first user utterance is present in the context information 450. The context information 450 may include the previous user utterance history (e.g., session information 451, execution device information 453, and intent 455 related to the previous user utterance). Referring to FIG. 4, the context information 450 may include the history of the previous second user utterance 491. For example, the second user utterance history 491 may be the history of the second user utterance 491 belonging to the same session as a session (session 1) of the current first user utterance. When there is a previous user utterance history belonging to the same session as the first user utterance, the electronic device may perform operation 403.

In operation 403, the electronic device may search for an execution device and an external device (e.g., an loT device) corresponding to intent information, which are obtained by analyzing the voice input. For example, the search result may include identification information of a device and intent information. For example, the electronic device may search for external devices corresponding to an air conditioner and purify-on (air purification on). For example, the electronic device may identify the search result including information (Deviceld: 12345678, intent: purify-on) related to a second external device (e.g., an air conditioner in a master bedroom) and information

(Deviceld: 11111111, intent: purify-on) related to a third external device (e.g., an air conditioner in a living room). For example, the electronic device may identify identification number 12345678 of the second external device (e.g., the air conditioner in the master bedroom) and identification number 11111111 of the third external device (e.g., the air conditioner in the living room) that are capable of performing an operation corresponding to intent (purify-on). According to an embodiment, the electronic device may search for a device having intent which is similar but not identical to intent of a user utterance by determining the similarity between intent of the first user utterance and intent of a function supported by an external device. For example, when the intent of the first user utterance is purify-on (air purification on), the electronic device may obtain information of the corresponding external device as the search result when the external device has intent (e.g., mode-setValue-purify) of the same or similar function even though the intent of the external device is not the same as 'purify-on'.

In operation 404, the electronic device may determine whether execution device information included in the context information 450 is present in the search result in operation 403. For example, the electronic device may determine whether the execution device information included in the history of the second user utterance is present in the search result. For example, when the execution device information included in the context information 450 is not present in the search result, the electronic device may perform operation 405. When the execution device information included in the context information 450 is present in the search result, the electronic device may perform operation 406.

In operation 405, the electronic device may not update information associated with the first user utterance in response to recognizing that information for updating information associated with the first user utterance is not found.

In operation 406, the electronic device may update information related to the first user utterance based on the context information 450. For example, the electronic device may select information (e.g., information of the third external device) of a specific external device from the search result based on information of the external device (e.g., the third external device) for the same execution device information (Device Id) included in the context information 450. For example, the electronic device may determine a voice command based on the updated information related to the first user utterance. For example, the electronic device may determine an execution device (Device Id) associated with the first user utterance for determining the voice command as 12345678, which is the execution device information included in the context information 450. For example, when the first user utterance is "turn on the air purification of the air conditioner", the electronic device may determine that the intent of the first user utterance corresponds to "turn on the air purification of the air conditioner in the master bedroom", based on the context information 450. The electronic device may determine a voice command based on the determined execution device information (e.g., 12345678) and intent (e.g., purify-on) and may transmit the voice command to the loT server.

According to an embodiment, at least some of the operations of FIG. 4 may be omitted, or at least one other operation (e.g., at least some of the operations of FIGS. 2, 3, 5 to 9, 12, or 13) may be added, and the order of at least some of the operations may be changed.

According to an embodiment, when the previous user utterance history 491 belonging to the same session as the current user utterance is present in the context information 450, the electronic device may determine the voice command corresponding to the current user utterance without requesting an additional user utterance by updating information related to the user utterance for determining the voice command based on the context information 450. Accordingly, the electronic device may determine an execution device that matches a user's intent without an additional user utterance, and may allow the execution device to perform an operation corresponding to the user intent.

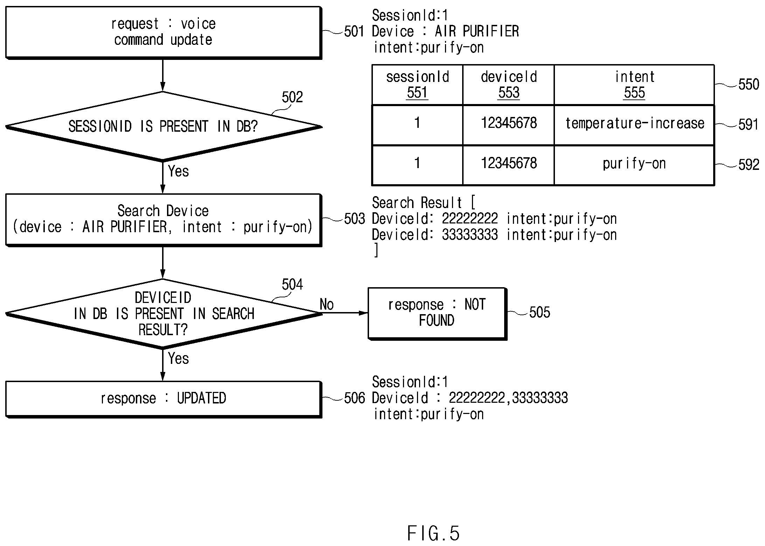

FIG. 5 is a drawing for describing an operation of an electronic device, according to an embodiment. FIG. 5 shows that there is a previous user utterance history belonging to the same session as a current user utterance in context information, but it is not a user utterance history for a device that matches a device search result. Hereinafter, any content overlapping the description of FIGS. 2 to 4 is briefly described or omitted.

According to an embodiment, in operation 501, an electronic device (e.g., the voice assistant server 120 of FIG. 1, the electronic device 1100 of FIG. 11, the server 1408 of FIG. 14, or the intelligent server 1600 of FIG. 15) may receive a voice input corresponding to a first user utterance (e.g., "turn up the air purifier") from a first external device (e.g., the electronic device 1401 of FIG. 14 or the user terminal 1501 of FIGS. 15 to 17). The electronic device may identify a session (session Id), an execution device (device), and intent related to the first user utterance based on the voice input. For example, the electronic device may identify "session 1", "air purifier", and "purify-on". The electronic device may determine a voice command based on information identified by analyzing the voice input. The electronic device may attempt to update the voice command determined by analyzing the voice input based on pre-stored context information 550.

In operation 502, the electronic device may determine whether a previous user utterance history belonging to the same session as the current first user utterance is present in the context information 550. The context information 550 may include the previous user utterance history (e.g., session information 551, execution device information 553, and intent 555 related to the previous user utterance). Referring to FIG. 5, the context information 550 may include a second user utterance history 591 and a third user utterance history 592 prior to the first user utterance. For example, the second user utterance history 591 and the third user utterance history 592 may be the history of a user utterance belonging to the same session as the first user utterance. When there is a previous user utterance history belonging to the same session as the current first user utterance, the electronic device may perform operation 503.

In operation 503, the electronic device may search for an execution device and an external device (e.g., an loT device) corresponding to intent information, which are obtained by analyzing the voice input. For example, the search result may include identification information of an external device and intent information. For example, the electronic device may search for external devices corresponding to an air purifier and purify-on (air purification on). For example, the electronic device may identify the search result including information (Deviceld: 22222222, intent: purify-on) related to a second external device and information (Deviceld: 33333333, intent: purify-on) related to a third external device. For example, the electronic device may identify identification number 22222222 of the second external device (e.g., the first air purifier) and identification number 33333333 of the third external device (e.g., the second air purifier) that are capable of performing an operation corresponding to intent (purify-on).

In operation 504, the electronic device may determine whether execution device information included in the context information 550 is present in the search result in operation 503. For example, when the execution device information included in the context information 550 is not present in the search result, the electronic device may perform operation 505. When the execution device information included in the context information 550 is present in the search result, the electronic device may perform operation 506.

In operation 505, the electronic device may not update information associated with the first user utterance in response to recognizing that information for updating information associated with the first user utterance is not found. For example, the electronic device may maintain the search result (e.g., Sessionld: 1, Deviceld: 22222222, 33333333, intent: purify-on) identified in operation 503. The electronic device (e.g., an execution module) may generate a natural language message for prompting an additional user utterance based on the search result, may transmit the natural language message to the first external device, and may allow the first external device to display the natural language message to a user. For example, the search result may include information about the second external device (e.g., an air purifier in a master bedroom) with Deviceld: 22222222 and a third external device (e.g., an air purifier in a living room) with Deviceld: 33333333. The electronic device may generate a natural language message (e.g., "There are two air purifiers. Which device do you want to run among an air purifier in a master bedroom or an air purifier in a living room?) for determining which execution device the user intends to execute among the second external device and the third external device to the user, and may allow the first external device to output the natural language message. The electronic device may specify an external device matching user intent among the second external device and the third external device based on a voice input corresponding to an additional user utterance obtained in response to the natural language message. For example, when the second external device is specified as an execution device, the electronic device may determine a voice command based on intent and information of the specific execution device, and may transmit the determined voice command to an IoT server (e.g., the loT server 130 of FIG. 1).

In operation 506, the electronic device may update information related to the first user utterance based on the context information 550. For example, operation 506 may correspond to operation 406 of FIG. 4.

According to an embodiment, at least some of the operations of FIG. 5 may be omitted, or at least one other operation (e.g., at least some of the operations of FIGS. 2, 4, 6 to 9, 12, or 13) may be added, and the order of at least some of the operations may be changed.

According to an embodiment, when a previous user utterance history belonging to the same session as the current user utterance is present in the context information 550, but is not a user utterance history for a device matching the device search result, the electronic device may prompt an additional user utterance instead of transmitting a voice command generated based on information (e.g., information identified in operation 501) related to the initially identified user utterance to the loT server, may generate a voice command based on information (e.g., information for specifying an execution device) updated based on the additional user utterance, and may transmit the voice command to the loT server. Accordingly, the loT server (e.g., a voice intent handler) may control the execution device based on the received voice command without separately performing an operation of searching for and/or specifying an execution device corresponding to the voice command. According to an embodiment of the disclosure, before an operation of transmitting an unspecified (unclear) voice command to an IoT server and receiving a request for an additional user utterance from the loT server occurs, the electronic device may first specify intent and an execution device matching the user intent, thereby improving the performance and efficiency of a voice assistant service.

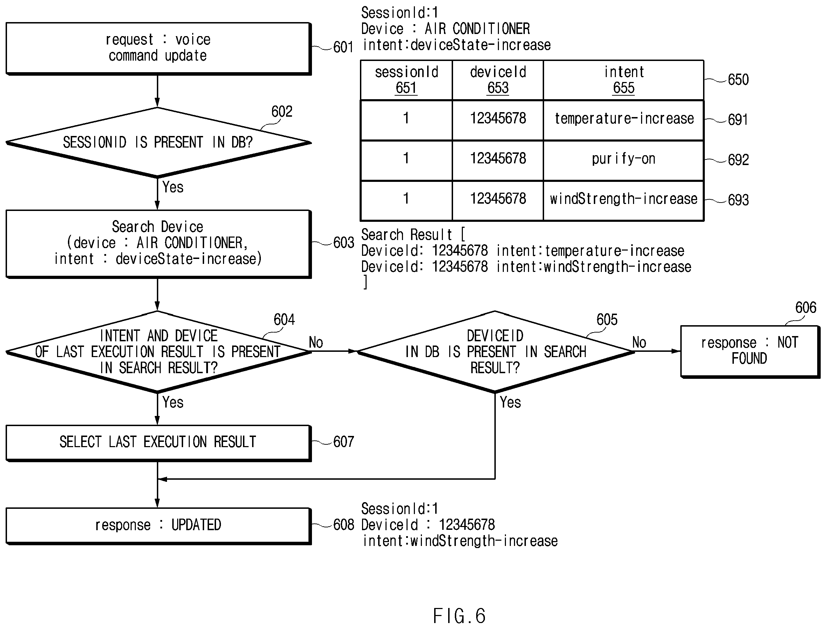

FIG. 6 is a drawing for describing an operation of an electronic device, according to an embodiment. FIG. 6 shows that a previous user utterance history belonging to the same session as the current user utterance is present in context information, and execution device information and intent corresponding to the search result are included in a last user utterance history. Hereinafter, any content overlapping the description of FIGS. 2 to 5 is briefly described or omitted.

According to an embodiment, in operation 601, an electronic device (e.g., the voice assistant server 120 of FIG. 1, the electronic device 1100 of FIG. 11, the server 1408 of FIG. 14, or the intelligent server 1600 of FIG. 15) may receive a voice input corresponding to a first user utterance (e.g., "increase an air conditioner") from a first external device (e.g., the electronic device 1401 of FIG. 14 or the user terminal 1501 of FIGS. 15 to 17). The electronic device may identify a session (session Id), an execution device (device), and intent related to the first user utterance based on the voice input. For example, the electronic device may identify "session 1", "air conditioner", and "deviceState-increase". The electronic device may determine a voice command based on information identified by analyzing the voice input. The electronic device may attempt to update the voice command determined by analyzing the voice input based on pre-stored context information 650. For example, the electronic device may attempt to update at least some of information associated with the first user utterance identified based on the voice input.

In operation 602, the electronic device may determine whether a previous user utterance history belonging to the same session as the current first user utterance is present in the context information 650. The context information 650 may include the previous user utterance history (e.g., session information 651, execution device information 653, and intent 655 related to the previous user utterance). Referring to FIG. 6, the context information 650 may include a second user utterance history 691, a third user utterance history 692, and a fourth user utterance history 693 prior to the first user utterance. For example, the second to fourth user utterance history may be the history of user utterances belonging to the same session as the first user utterance. When there is a previous user utterance history belonging to the same session as the current first user utterance, the electronic device may perform operation 603.

In operation 603, the electronic device may search for an execution device and an external device (e.g., an loT device) corresponding to intent information, which are obtained by analyzing the voice input. For example, the search result may include identification information of an external device and intent information. For example, an electronic device may discover air conditioners and external devices corresponding to deviceState-increase (increasing a device state). For example, an electronic device may identify a search result including first information (e.g., Deviceld: 12345678, intent: temperature-increase) related to a second external device (e.g., air conditioner in a master bedroom) and second information (e.g., Deviceld: 12345678, intent: windStrength-increase) related to the second external device. For example, the temperature-increase may be intent indicating an operation of increasing temperature, and the windStrength-increase may be intent indicating an operation of increasing wind strength. For example, the electronic device may identify pieces of intent (temperature-increase and windStrength-increase) corresponding to intent (deviceState-increase) of the current first user utterance for the second external device.

In operation 604, the electronic device may determine whether intent and execution device information related to the last stored (i.e., most recently uttered) user utterance history (e.g., the fourth user utterance history 693) in the context information 650 is present in the search result in operation 603. When intent and execution device information corresponding to the last user utterance history of the context information 650 is present in the search result, the electronic device may perform operation 607. When intent and execution device information corresponding to the last user utterance history of the context information 650 is not present in the search result, the electronic device may perform operation 605. For example, FIG. 6 shows that a previous user utterance history belonging to the same session as the current user utterance is present in the context information 650, and execution device information and intent corresponding to the search result are included in a last user utterance history (corresponding to operation 604-Yes).

In operation 605, the electronic device may determine whether execution device information included in the context information 650 is present in the search result in operation 603. For example, operation 605 may correspond to operation 504 of FIG. 5.

In operation 606, the electronic device may not update information associated with a user utterance in response to recognizing that information for updating information associated with the user utterance is not found. For example, operation 606 may correspond to operation 505 of FIG. 5.

In operation 607, the electronic device may select, as information for updating information related to the first user utterance, execution device information and intent related to the last stored (i.e., most recently uttered) user utterance history (e.g., the fourth user utterance history 693) in the context information 650.

In operation 608, the electronic device may update information related to the user utterance based on the context information 650. For example, the electronic device may update information related to the first user utterance based on execution device information and/or intent, which is included in the fourth user utterance history 693. For example, the electronic device may update intent associated with the first user utterance so as to be changed into "windStrength-increase", and/or may update the execution device information related to the first user utterance to "12345678", which is identification information of a second external device (e.g., an air conditioner in a master bedroom). For example, when the first user utterance is "increase an air conditioner", the electronic device may determine that the intent of the first user utterance corresponds to "increase wind strength of the air conditioner in the master bedroom", based on the context information 650. The air conditioner electronic device may generate a voice command based on the updated information related to the first user utterance and may transmit the voice command to an IoT server (e.g., the loT server 130 of FIG. 1).

According to an embodiment, at least some of the operations of FIG. 6 may be omitted, or at least one other operation (e.g., at least some of the operations of FIGS. 2 to 5, 7 to 9, 12, or 13) may be added, and the order of at least some of the operations may be changed.

According to an embodiment, the electronic device may update at least one of information (e.g., execution device information and/or intent) related to a current ambiguous user utterance based on the context information 650 related to the previous user utterance history, and may generate a voice command based on the updated information.

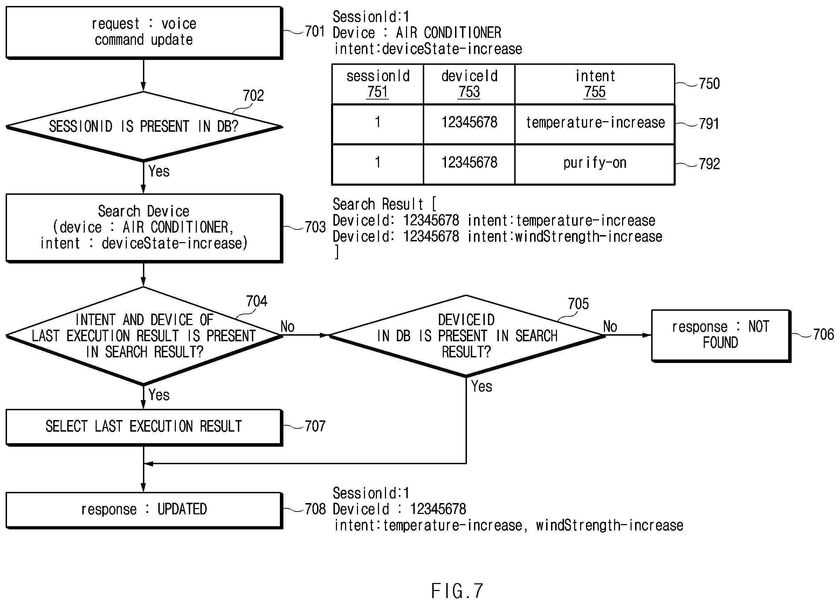

FIG. 7 is a drawing for describing an operation of an electronic device, according to an embodiment. FIG. 7 shows that a previous user utterance history belonging to the same session as the current user utterance is present in context information, and execution device information and intent corresponding to the search result are not included in a last user utterance history. Hereinafter, any content overlapping the description of FIGS. 2 to 6 is briefly described or omitted.

According to an embodiment, in operation 701, an electronic device (e.g., the voice assistant server 120 of FIG. 1, the electronic device 1100 of FIG. 11, the server 1408 of FIG. 14, or the intelligent server 1600 of FIG. 15) may receive a voice input corresponding to a first user utterance (e.g., "increase an air conditioner") from a first external device (e.g., the electronic device 1401 of FIG. 14 or the user terminal 1501 of FIGS. 15 to 17). The electronic device may identify a session (session Id), an execution device (device), and intent related to the first user utterance based on the voice input. For example, the electronic device may identify "session 1", "air conditioner", and "deviceState-increase". The electronic device may attempt to update at least some of information associated with the first user utterance identified based on the voice input.

In operation 702, the electronic device may determine whether a previous user utterance history belonging to the same session as the current first user utterance is present in context information 750. The context information 750 may include the previous user utterance history (e.g., session information 751, execution device information 753, and intent 755 related to the previous user utterance). Referring to FIG. 7, the context information 750 may include a second user utterance history 791 and a third user utterance history 792 prior to the first user utterance. For example, the second user utterance history 791 and the third user utterance history 792 may be the history of a user utterance belonging to the same session as the first user utterance. When there is a previous user utterance history belonging to the same session as the current first user utterance, the electronic device may perform operation 703.

In operation 703, the electronic device may search for an execution device and an external device (e.g., an loT device) corresponding to intent information, which are obtained by analyzing the voice input. For example, the search result may include identification information of an external device and intent information. For example, an electronic device may discover air conditioners and external devices corresponding to deviceState-increase (increasing a device state). For example, an electronic device may identify a search result including first information (e.g., Deviceld: 12345678, intent: temperature-increase) related to a second external device (e.g., air conditioner in a master bedroom) and second information (e.g., Deviceld: 12345678, intent: windStrength-increase) related to the second external device. For example, the electronic device may identify pieces of intent (temperature-increase and windStrength-increase) corresponding to intent (deviceState-increase) of the current first user utterance for the second external device.

In operation 704, the electronic device may determine whether intent and execution device information related to the last stored (i.e., most recently uttered) user utterance history (e.g., the third user utterance history 792) in the context information 750 is present in the search result in operation 703. When intent and execution device information corresponding to the last user utterance history of the context information 750 is present in the search result, the electronic device may perform operation 707. When intent and execution device information corresponding to the last user utterance history of the context information 750 is not present in the search result, the electronic device may perform operation 705.

In operation 705, the electronic device may determine whether execution device information included in the context information 750 is present in the search result in operation 703. The electronic device may identify that the second user utterance history 791 and the third user utterance history 792, which are included in the context information 750, are identical to execution device information (e.g., deviceld) included in the search result. For example, operation 705 may correspond to operation 605.

In operation 706, the electronic device may not update information associated with a user utterance in response to recognizing that information for updating information associated with the user utterance is not found. For example, operation 706 may correspond to operation 606.

In operation 707, the electronic device may select, as information for updating information related to the first user utterance, execution device information and intent related to the last stored (i.e., most recently uttered) user utterance history (e.g., the third user utterance history 792) in the context information 750. For example, operation 707 may correspond to operation 607.

In operation 708, the electronic device may update information related to the user utterance based on the context information 750. For example, in the case of FIG. 7, a previous user utterance history (the second user utterance history 791 and the third user utterance history 792) belonging to the same session as the current first user utterance may be present in the context information 750, and execution device information and intent corresponding to the search result may not be included in the last user utterance history (corresponding to operation 704-No and operation 705-Yes). The electronic device may update at least some of information related to the first user utterance in response to recognizing that the search result includes execution device information (e.g., deviceld) included in the context information 750. For example, the electronic device may update the execution device information (e.g., an air conditioner) so as to be changed into information (e.g., 12345678) of an execution device included in the context information 750, and the intent related to the first user utterance may be maintained with two pieces of found intent (e.g., temperature-increase, windStrength-increase). The electronic device may generate a voice command based on information related to the updated first user utterance. According to an embodiment, when the generated voice command is incomplete (e.g., intent is not specified), the electronic device may not directly transmit the voice command to the loT server, but may generate a natural language message for prompting an additional user utterance, may transmit the natural language message to the first external device, and may allow the first external device to output the natural language message to a user. For example, when the voice command includes first intent (temperature-increase) corresponding to an increase in temperature and second intent (windStrength-increase) corresponding to an increase in wind strength, the electronic device may generate a natural language message (e.g., "Which do you want to increase temperature or wind strength?) for prompting the selection of the user among the first intent and the second intent, and may allow the natural language message to be output through the first external device. The electronic device may specify intent, which the user intends among the first intent and the second intent, based on a voice input corresponding to an additional user utterance (e.g., "temperature") obtained in response to the natural language message. For example, when specifying the first intent, the electronic device may update the voice command based on the specified intent and may transmit the updated voice command to the loT server. For example, when the first user utterance is "increase an air conditioner," the electronic device may determine that intent of the first user utterance corresponds to "increase the temperature of the air conditioner", based on the context information 750 and the additional user utterance (e.g., "temperature"), and may generate the corresponding voice command.

According to an embodiment, at least some of the operations of FIG. 7 may be omitted, or at least one other operation (e.g., at least some of the operations of FIGS. 2 to 6, 8 to 9, 12, or 13) may be added, and the order of at least some of the operations may be changed.

According to an embodiment, the electronic device may update information related to a user utterance for generating a voice command based on the context information 750 when a specified condition is satisfied. Moreover, when the voice command is incomplete (e.g., the execution device and/or intent is not precisely specified), the electronic device may prompt an additional user utterance before transmitting the incomplete voice command to the loT device, and may update the voice command.

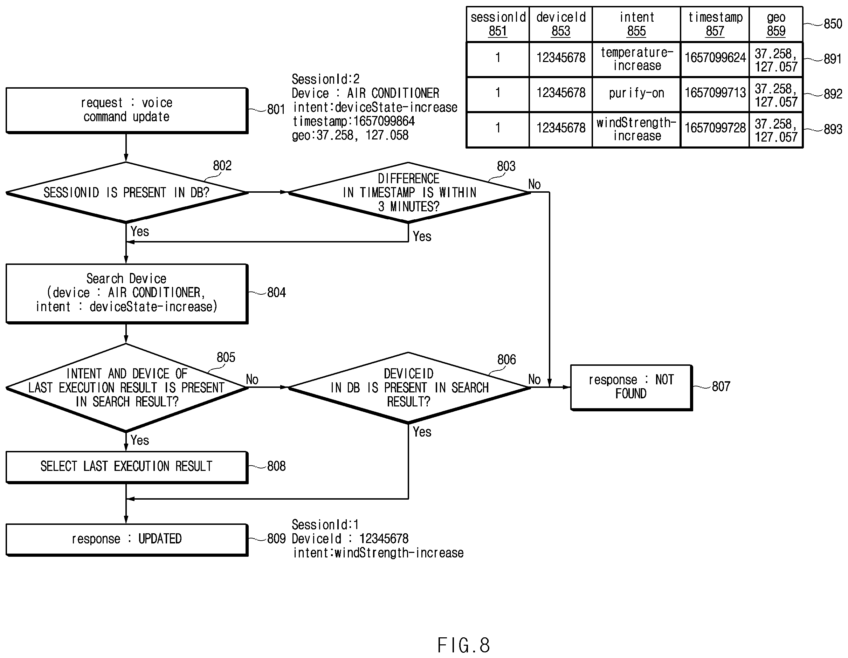

FIG. 8 is a drawing for describing an operation of an electronic device, according to an embodiment. FIG. 8 shows that a user utterance history, which belongs to a session different from a current user utterance and is within a specified first time from a time point of the current user utterance, is present in context information. Hereinafter, any content overlapping the description of FIGS. 2 to 7 is briefly described or omitted.

According to an embodiment, in operation 801, an electronic device (e.g., the voice assistant server 120 of FIG. 1, the electronic device 1100 of FIG. 11, the server 1408 of FIG. 14, or the intelligent server 1600 of FIG. 15) may receive a voice input corresponding to a first user utterance (e.g., "increase an air conditioner") from a first external device (e.g., the electronic device 1401 of FIG. 14 or the user terminal 1501 of FIGS. 15 to 17). The electronic device may identify a session (session Id), an execution device (device), intent, a timestamp, and a location (geo) related to the first user utterance based on the voice input. For example, the electronic device may identify session 2, air conditioner, deviceState-increase, 1657099864, and "37.258, 127.058". The electronic device may determine a voice command based on information identified by analyzing the voice input. The electronic device may attempt to update the voice command determined by analyzing the voice input based on pre-stored context information 850. For example, the electronic device may attempt to update at least some of information associated with the first user utterance identified based on the voice input.

In operation 802, the electronic device may determine whether a previous user utterance history belonging to the same session as the current first user utterance is present in the context information 850. The context information 850 may include a previous user utterance history (e.g., session information 851, execution device information 853, intent 855, a timestamp 857, and location information 859 related to the previous user utterance). Referring to FIG. 8, the context information 850 may not include a user utterance history belonging to the same session as the first user utterance. The electronic device may perform operation 804 when there is the previous user utterance history belonging to the same session as the first user utterance, and may perform operation 803 when there is no previous user utterance history belonging to the same session.

In operation 803, the electronic device may determine whether the timestamp of the user utterance history included in the context information 850 is within a specified first time (e.g., 3 minutes) from the timestamp of the first user utterance. Referring to FIG. 8, the timestamp of the first user utterance is 1657099864 (KST (Korea Standard Time) 9:31:04); the timestamp of a second user utterance history 891 is 1657099624 (KST 9:27:04); the timestamp of a third user utterance history 892 is 1657099713 (KST 9:28:33); and the timestamp of a fourth user utterance history 893 is 1657099728 (KST 9:28:48). That is, the context information 850 may include the second user utterance history 891, the third user utterance history 892, and the fourth user utterance history 893. The timestamp of the third user utterance history 892 and the timestamp of the fourth user utterance history 893 may be within the specified first time from the timestamp of the first user utterance. The electronic device may perform operation 804 when the timestamp of the user utterance history included in the context information 850 is within the specified first time from the timestamp of the first user utterance, and may perform operation 807 when it is not within the first time.

In operation 804, the electronic device may search for an execution device and an external device (e.g., an loT device) corresponding to intent information, which are obtained by analyzing the voice input. For example, the search result may include identification information of an external device and intent information. For example, an electronic device may discover air conditioners and external devices corresponding to deviceState-increase (increasing a device state). For example, an electronic device may identify a search result including first information (e.g., Deviceld: 12345678, intent: temperature-increase) related to a second external device (e.g., air conditioner in a master bedroom) and second information (e.g., Deviceld: 12345678, intent: windStrength-increase) related to the second external device. For example, the temperature-increase may be intent indicating an operation of increasing temperature, and the windStrength-increase may be intent indicating an operation of increasing wind strength. For example, the electronic device may identify pieces of intent (temperature-increase and windStrength-increase) corresponding to intent (deviceState-increase) of the current first user utterance for the second external device. For example, operation 804 may correspond to operation 603 of FIG. 6 or operation 703 of FIG. 7.

In operation 805, the electronic device may determine whether intent and execution device information related to the last stored (i.e., most recently uttered) user utterance history (e.g., the fourth user utterance history 893) in the context information 850 is present in the search result in operation 804. When intent and execution device information corresponding to the last user utterance history of the context information 850 is present in the search result, the electronic device may perform operation 808. When intent and execution device information corresponding to the last user utterance history of the context information 850 is not present in the search result, the electronic device may perform operation 806. For example, operation 805 may correspond to operation 604 of FIG. 6 or operation 704 of FIG. 7.

In operation 806, the electronic device may determine whether execution device information included in the context information 850 is present in the search result in operation 804. For example, the context information 850 compared with the search result in operation 806 (and/or operation 805) may be the third user utterance history 892 and the fourth user utterance history 893, which have timestamps within the specified first time from the timestamp of the first user utterance. For example, to update information related to the first user utterance, the electronic device may not use the second user utterance history 891 that has a timestamp that is outside the specified first time from the timestamp of the first user utterance. For example, operation 806 may correspond to operation 605 of FIG. 6 or operation 705 of FIG. 7.

In operation 807, the electronic device may not update information associated with a user utterance in response to recognizing that information for updating information associated with the user utterance is not found. For example, operation 807 may correspond to operation 606 of FIG. 6 or operation 706 of FIG. 7.

In operation 808, the electronic device may select, as information for updating information related to the first user utterance, execution device information and intent related to the last stored (i.e., most recently uttered) user utterance history (e.g., the fourth user utterance history 893) in the context information 850. For example, operation 808 may correspond to operation 607 of FIG. 6 or operation 707 of FIG. 7.

In operation 809, the electronic device may update at least some of information related to the user utterance based on the context information 850. For example, the electronic device may update information related to the first user utterance based on execution device information and/or intent, which is included in the fourth user utterance history 893. For example, the electronic device may update intent associated with the first user utterance so as to be changed into "windStrength-increase", and/or may update the execution device information related to the first user utterance to "12345678", which is identification information of a second external device (e.g., an air conditioner in a master bedroom). For example, when the first user utterance is "increase an air conditioner", the electronic device may determine that the intent of the first user utterance corresponds to "increase wind strength of the air conditioner in the master bedroom", based on the context information 850 (e.g., the fourth user utterance history 893). The air conditioner electronic device may generate a voice command based on the updated information related to the first user utterance and may transmit the voice command to an IoT server. For example, operation 809 may correspond to operation 608 of FIG. 6 or operation 708 of FIG. 7.

According to an embodiment, at least some of the operations of FIG. 8 may be omitted, or at least one other operation (e.g., at least some of the operations of FIGS. 2 to 7, 9, 12, or 13) may be added, and the order of at least some of the operations may be changed.

According to an embodiment, when the user utterance history in the context information 850 is a user utterance history within the specified first time from the time point of the current user utterance, even when the previous user utterance history included in the context information 850 does not belong to the same session as the current user utterance, the electronic device may update at least some of the information related to the current user utterance based thereon and may generate a voice command to be transmitted to the loT server based on the updated information.

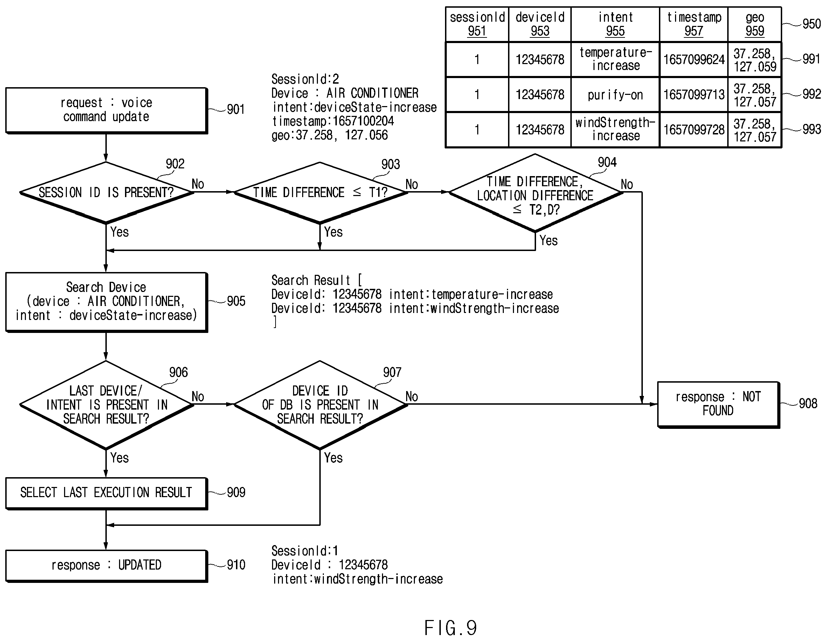

FIG. 9 is a drawing for describing an operation of an electronic device, according to an embodiment. FIG. 9 shows that a user utterance history, which belongs to a session different from a current user utterance and is uttered within a specified distance from a current user utterance location within a specified second time from a point in time of the current user utterance, is present in context information. Hereinafter, any content overlapping the description of FIGS. 2 to 8 is briefly described or omitted.

According to an embodiment, in operation 901, an electronic device (e.g., the voice assistant server 120 of FIG. 1, the electronic device 1100 of FIG. 11, the server 1408 of FIG. 14, or the intelligent server 1600 of FIG. 15) may receive a voice input corresponding to a first user utterance (e.g., "increase an air conditioner") from a first external device (e.g., the electronic device 1401 of FIG. 14 or the user terminal 1501 of FIGS. 15 to 17). The electronic device may identify a session (session Id), an execution device (device), intent, a timestamp, and a location (geo) related to the first user utterance based on the voice input. For example, the electronic device may identify session 2, air conditioner, deviceState-increase, 1657100204, and "37.258, 127.056". The electronic device may determine a voice command based on information identified by analyzing the voice input. The electronic device may attempt to update the voice command determined by analyzing the voice input based on pre-stored context information 950. For example, the electronic device may attempt to update at least some of information associated with the first user utterance identified based on the voice input.

In operation 902, the electronic device may determine whether a previous user utterance history belonging to the same session as the current first user utterance is present in the context information 950. For example, the electronic device may determine whether a session ID the same as the current first user utterance is present in the context information 950. The context information 950 may include a previous user utterance history (e.g., session information (e.g., session ID) 951, execution device information 953, intent 955, a timestamp 957, and location information 959 related to the previous user utterance). Referring to FIG. 9, the context information 950 may not include a user utterance history belonging to the same session as the first user utterance. The electronic device may perform operation 905 when there is the previous user utterance history belonging to the same session as the first user utterance, and may perform operation 903 when there is no previous user utterance history belonging to the same session.

In operation 903, the electronic device may determine whether the timestamp of the user utterance history included in the context information 950 is within a specified first time T1 (e.g., 3 minutes) from the timestamp of the first user utterance. For example, the electronic device may determine whether a time difference between the timestamp of the user utterance history included in the context information 950 and the timestamp of the first user utterance is within the specified first time T1. Referring to FIG. 9, the timestamp of the first user utterance is 1657100204 (KST 9:36:44 AM); the timestamp of a second user utterance history 991 is 1657099624 (KST 9:27:04); the timestamp of a third user utterance history 992 is 1657099713 (KST 9:28:33); and the timestamp of a fourth user utterance history 993 is 1657099728 (KST 9:28:48). That is, it is assumed that the context information 950 includes the second user utterance history 991, the third user utterance history 992, and the fourth user utterance history 993, but the timestamp of the second user utterance history 991, the timestamp of the third user utterance history 992, and the timestamp of the fourth user utterance history 993 are not within the specified first time T1 from the timestamp of the first user utterance. The electronic device may perform operation 905 when the timestamp of the user utterance history included in the context information 950 is within the specified first time T1 from the timestamp of the first user utterance, and may perform operation 904 when it is not within the first time T1. For example, operation 903 may correspond to operation 803 of FIG. 8.

In operation 904, the electronic device may determine whether the timestamp of the user utterance history included in the context information 950 is within a specified second time T2 (e.g., 10 minutes) from the timestamp of the first user utterance, and the location (geo) of the user utterance history is within a specified distance 'D' (e.g., 100 m) from the location of the first user utterance. For example, the location of the user utterance history may indicate the latitude and the longitude (e.g., (latitude, longitude)) of a location where the user utterance occurs. Referring to FIG. 9, it is assumed that the timestamp of the second user utterance history 991, the timestamp of the third user utterance history 992, and the timestamp of the fourth user utterance history 993 are within the specified first time T1 from the timestamp of the first user utterance. Furthermore, it is assumed that a location of the second user utterance history 991 is (37.258, 127.059), and is outside a specified distance (e.g., 100 m) from the location of the first user utterance (37.258, 127.056); a location of the third user utterance history 992 is (37.258, 127.057), and is within the specified distance 'D' (e.g., 100 m) from the location of the first user utterance (37.258, 127.056); and a location of the fourth user utterance history 993 is (37.258, 127.057), and is within the specified distance 'D' (e.g., 100 m) from the location of the first user utterance (37.258, 127.056). For example, when the timestamp of the user utterance history included in the context information 950 is within the specified second time T2 from the timestamp of the first user utterance, and the location of the user utterance history is within the specified distance 'D' from the location of the first user utterance, the electronic device may perform operation 905. When the timestamp of the user utterance history included in the context information 950 is not within the specified second time T2 from the timestamp of the first user utterance, or the location of the user utterance history is not within the specified distance 'D' from the location of the first user utterance, the electronic device may perform operation 908.

In operation 905, the electronic device may search for an execution device and an external device (e.g., an loT device) corresponding to intent information, which are obtained by analyzing the voice input. For example, the search result may include identification information of an external device and intent information. For example, an electronic device may discover air conditioners and external devices corresponding to deviceState-increase (increasing a device state). For example, an electronic device may identify a search result including first information (e.g., Deviceld: 12345678, intent: temperature-increase) related to a second external device (e.g., a floor-standing air conditioner) and second information (e.g., Deviceld: 12345678, intent: windStrength-increase) related to the second external device. For example, the temperature-increase may be intent indicating an operation of increasing temperature, and the windStrength-increase may be intent indicating an operation of increasing wind strength. For example, the electronic device may identify pieces of intent (temperature-increase and windStrength-increase) corresponding to intent (deviceState-increase) of the current first user utterance for the second external device. For example, operation 905 may correspond to operation 603 of FIG. 6, operation 703 of FIG. 7, or operation 804 of FIG. 8.

In operation 906, the electronic device may determine whether intent and execution device information related to the last stored (i.e., most recently uttered) user utterance history (e.g., the fourth user utterance history 993) in the context information 950 is present in the search result in operation 905. When intent and execution device information corresponding to the last user utterance history of the context information 950 is present in the search result, the electronic device may perform operation 909. When intent and execution device information corresponding to the last user utterance history of the context information 950 is not present in the search result, the electronic device may perform operation 907. For example, operation 906 may correspond to operation 604 of FIG. 6, operation 704 of FIG. 7, or operation 805 of FIG. 8.

In operation 907, the electronic device may determine whether execution device information included in the context information 950 is present in the search result in operation 905. For example, the context information 950 compared with the search result in operation 907 and/or operation 906 may be the third user utterance history 992 and the fourth user utterance history 993, which have timestamps within the specified second time T2 from the timestamp of the first user utterance, and which have location information within the specified distance 'D' from the location of the first user utterance. For example, to update information related to the first user utterance, the electronic device may not use the second user utterance history 991 (and a user utterance history uttered at a location outside the specified distance 'D' from the location of the first user utterance) that has a timestamp that is outside the specified second time T2 from the timestamp of the first user utterance. For example, operation 907 may correspond to operation 605 of FIG. 6, operation 705 of FIG. 7, or operation 806 of FIG. 8.

In operation 908, the electronic device may not update information associated with a user utterance in response to recognizing that information for updating information associated with the user utterance is not found. For example, operation 908 may correspond to operation 606 of FIG. 6, operation 706 of FIG. 7, or operation 807 of FIG. 8.

In operation 909, the electronic device may select, as information for updating information related to the first user utterance, execution device information and intent related to the last stored (i.e., most recently uttered) user utterance history (e.g., the fourth user utterance history 993) in the context information 950. For example, operation 909 may correspond to operation 607 of FIG. 6, operation 707 of FIG. 7, or operation 808 of FIG. 8.

In operation 910, the electronic device may update at least some of information related to the user utterance based on the context information 950. For example, the electronic device may update information related to the first user utterance based on execution device information and/or intent, which is included in the fourth user utterance history 993. For example, the electronic device may update intent associated with the first user utterance so as to be changed into "windStrength-increase", and/or may update the execution device information related to the first user utterance to "12345678", which is identification information of a second external device (e.g., a floor-standing air conditioner). For example, when the first user utterance is "increase an air conditioner", the electronic device may determine that the intent of the first user utterance corresponds to "increase wind strength of the floor-standing air conditioner", based on the context information 950 (e.g., the fourth user utterance history 993). The air conditioner electronic device may generate a voice command based on the updated information related to the first user utterance and may transmit the voice command to an IoT server. For example, operation 910 may correspond to operation 608 of FIG. 6, operation 708 of FIG. 7, or operation 809 of FIG. 8.

According to an embodiment, at least some of the operations of FIG. 9 may be omitted, or at least one other operation (e.g., at least some of the operations of FIGS. 2 to 8, 12, or 13) may be added, and the order of at least some of the operations may be changed.

According to an embodiment, when the user utterance history in the context information 950 is a user utterance history that is within the specified second time from the time point of the current user utterance and is uttered within a specified distance from a first user utterance location, even when the previous user utterance history included in the context information 950 does not belong to the same session as the current user utterance, the electronic device may update at least some of the information related to the current user utterance based thereon and may generate a voice command to be transmitted to the loT server based on the updated information.

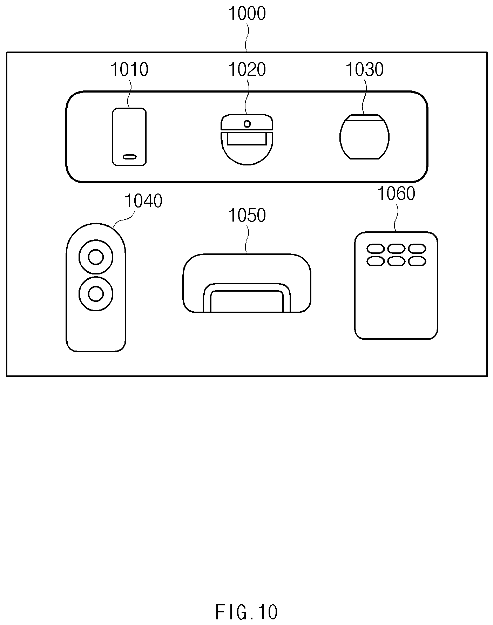

FIG. 10 is a drawing for describing an operation of an electronic device, according to an embodiment. For example, FIG. 10 illustrates that a voice assistant service is provided in a multi device environment (MDE) 1000 including a first device 1010 (e.g., the electronic device 1401 of FIG. 14 or the user terminal 1501 of FIGS. 15 to 17), a second device 1020, a third device 1030, a fourth device 1040, a fifth device 1050, and a sixth device 1060, but the MDE 1000 is not limited to that illustrated in FIG. 10. For example, the devices included in the MDE 1000 may form at least part of the voice assistant system. In the voice assistant system, a voice assistant server (e.g., the voice assistant server 120 of FIG. 1, the electronic device 1100 of FIG. 11, the server 1408 of FIG. 14, or the intelligent server 1600 of FIG. 15) may further include an external device (e.g., the electronic device 1401 of FIG. 14 or the user terminal 1501 of FIGS. 15 to 17) in addition to the devices illustrated in FIG. 10. For example, in FIG. 10, it is assumed that each of the first device 1010, the second device 1020, and the third device 1030 is a device (e.g., a device capable of activating a voice assistant service in response to receiving a user utterance from a user) that supports a voice assistant function, but it is not limited thereto. Hereinafter, it is assumed that the first device 1010 (e.g., a mobile terminal) is movable by the user, and all of the second to fifth devices 1020 to 1050 are loT devices of the same or different types that are fixed at a specified location.

For example, it is assumed that the loT device includes two types of air conditioners (e.g., a floor-standing air conditioner and a wall-mounted air conditioner), and a user enters a first user utterance of "increase the temperature of an air conditioner" to the first device 1010 at a first time (e.g., 12 p.m.) at a first location (e.g., a living room). The voice assistant system may output a message for prompting an additional user utterance, such as "there are two air conditioners," with respect to an incomplete (or ambiguous) user utterance. For example, the electronic device may identify device information, intent, and/or parameter information corresponding to the first user utterance. When the electronic device may not identify at least some of the device information, intent, and/or parameter information corresponding to the first user utterance, the electronic device may identify the first user utterance as an incomplete (or ambiguous) user utterance. When the user enters an additional user utterance (e.g., a second user utterance) of "a floor-standing air conditioner" into the first device 1010 in response to the message for prompting the additional user utterance, the voice assistant system may increase the temperature of the floor-standing air conditioner and may output a natural language response ("increase the temperature of the floor-standing air conditioner") indicating an operation to be performed.

As a first example, it is assumed that the user enters a new and ambiguous (incomplete) user utterance (e.g., a third user utterance) in the same session after a previous user utterance. For example, when a user enters "decrease an air conditioner" to the first device 1010, the voice assistant system may determine whether there is a history of the previous user utterance in the same session, based on context information related to the user utterance history previously entered. The voice assistant system may decrease the temperature of the floor-standing air conditioner based on the history of the previous user utterance in the same session included in the context information. For example, the voice assistant system may specify a floor-standing air conditioner as a device (e.g., an execution device) that will execute an operation corresponding to a user utterance without receiving an additional user utterance based on context information related to the previous user utterance history. The voice assistant system (e.g., the first device 1010) may output a natural language response ("increase the temperature of the floor-standing air conditioner") indicating the determined user intent and specific execution device, and may control the operation of the execution device.

As a second example, it is assumed that the user enters a new user utterance within a specified first time (e.g., 3 minutes) in a different session after the previous user utterance. For example, it is assumed that a new user utterance (e.g., a fourth user utterance) is entered into the second device 1020 at a first location (e.g., a living room) at a second time (e.g., 12:01 p.m.). For example, the user may enter the fourth user utterance "increase the wind strength" into the second device 1020 at the first location at the second time. When there is no previous user utterance history of the same session as the fourth user utterance, the voice assistant system may determine whether there is a user utterance history that occurs within the specified first time (e.g., 3 minutes) from the fourth user utterance in a different session, based on context information. For example, when recognizing a user utterance within a specified first time (e.g., 3 minutes) from the fourth user utterance, the voice assistant system may specify an execution device (e.g., a floor-standing air conditioner) without an additional user utterance based on information related to the identified user utterance. For example, the voice assistant system may output a natural language response ("increase the wind strength of the floor-standing air conditioner") to user intent and the specific execution device.

As a third example, it is assumed that the user enters a new user utterance within a specified second time (e.g., 10 minutes) and within a specified distance (e.g., 100 m) in a different session after the previous user utterance. For example, it is assumed that a new user utterance (e.g., a fifth user utterance) is entered into the third device 1030 at the first location (e.g., the living room) at a third time (e.g., 12:05 p.m.). For example, the user may enter the fifth user utterance "increase the wind strength" into the third device 1030 at the first location at the third time. When there is no previous user utterance history of the same session as the fifth user utterance and no user utterance history within the specified first time, the voice assistant system may determine whether there is a user utterance history within the specified second time (e.g., 10 minutes) from the time point of the fifth user utterance in a different session and within the specified distance (e.g., 100 m) from a location of the fifth user utterance, based on the context information. For example, when recognizing a user utterance within a specified distance within a specified second time (e.g., 10 minutes) from the time point of the fifth user utterance, the voice assistant system may specify an execution device (e.g., a floor-standing air conditioner) without an additional user utterance based on information related to the identified user utterance. For example, the voice assistant system may output a natural language response ("increase the wind strength of the floor-standing air conditioner") to user intent and the specific execution device.

As a fourth example, it is assumed that the user enters a new user utterance within a specified distance (e.g., 100 m) after the specified second time (e.g., 10 minutes) elapses in a different session after the previous user utterance. For example, it is assumed that the user enters a new user utterance (e.g., a sixth user utterance) into the second device 1020 at the first location (e.g., the living room) at a fourth time (e.g., 12:20 p.m.). For example, the user may enter the sixth user utterance "increase the wind strength" into the second device 1020 at the first location at the fourth time. For example, the sixth user utterance is a user utterance after a specified second time (e.g., 10 minutes) elapses from the time point (e.g., 12:05) of the previous user utterance (e.g., the fifth user utterance). When recognizing the sixth user utterance after the specified second time (e.g., 10 minutes) elapses from the fifth user utterance, the voice assistant system may not search for context information. The voice assistant system may output a natural language message (e.g., "there are three devices: a floor-standing air conditioner, a wall-mounted air conditioner, and an air purifier") for prompting an additional user utterance of the user in response to the sixth user utterance. Afterwards, when the user enters an additional seventh user utterance (e.g., "an air purifier") in response to the natural language message, the voice assistant system may specify user intent and an execution device based at least partly on the seventh user utterance and may inform the user of this. For example, the voice assistant system may output a natural language message such as "increase the wind strength of the air purifier". The voice assistant system may provide a voice assistant service based on user intent and execution device information determined based on the context information.

As a fifth example, it is assumed that the user enters a new user utterance within a specified second time (e.g., 10 minutes) in a different session at a location outside a specified distance (e.g., 100 m) after a previous user utterance. For example, it is assumed that the user enters a new user utterance (e.g., an eighth user utterance) into the first device 1010 at a second location (e.g., in a vehicle of the user) at a fifth time (e.g., 12:07 p.m.). For example, the user may enter the eighth user utterance of "increase the wind strength" into the first device 1010 at the second location at the fifth time. For example, the eighth user utterance may be entered into the first device 1010 at a location outside a specified distance (e.g., 100 m) from the location of the previous user utterance (e.g., the fifth user utterance) within a specified second time (e.g., 10 minutes) from the time point (e.g., 12:05) of the previous user utterance (e.g., the fifth user utterance). For example, when recognizing the eighth utterance at a location outside a specified distance from the location of the fifth user utterance, the voice assistant system may not search for context information. The voice assistant system may output a natural language message (e.g., "there are three devices: a floor-standing air conditioner, a wall-mounted air conditioner, and an air purifier") for prompting an additional user utterance of the user in response to the eighth user utterance. Afterwards, when the user enters an additional ninth user utterance (e.g., "an air purifier") in response to the natural language message, the voice assistant system may specify user intent and an execution device based at least partly on the ninth user utterance and may inform the user of this. For example, the voice assistant system may output a natural language message such as "increase the wind strength of the air purifier".

As a sixth example, it is assumed that the user enters a new user utterance within a specified first time (e.g., 3 minutes) in a different session at a location outside a specified distance (e.g., 100 m) after a previous user utterance. For example, it is assumed that the user enters a new user utterance (e.g., a tenth user utterance) into the first device 1010 at a second location (e.g., in a vehicle of the user) at a sixth time (e.g., 12:09 p.m.). For example, the user may enter the tenth user utterance of "decrease the wind strength" into the first device 1010 at the second location (e.g., in a vehicle of the user) at the sixth time. For example, the tenth user utterance may be entered into the first device 1010 at a location outside a specified distance (e.g., 100 m) from the location of the previous user utterance (e.g., the eighth user utterance) within a specified first time (e.g., 3 minutes) from the time point (e.g., 12:07) of the previous user utterance (e.g., the eighth user utterance). For example, when the tenth user utterance is identified within a specified first time from the eighth user utterance, the voice assistant system may not output a natural language message for prompting an additional user utterance of the user based on context information. The voice assistant system may specify the user intent and the execution device based on the identified user utterance history and may notify the user of this. For example, the voice assistant system may output a natural language message such as "decrease the wind strength of the air purifier". The voice assistant system may provide a voice assistant service based on user intent and execution device information determined based on the context information.

According to an embodiment, when there is context information including a previous user utterance history of the same session, a previous user utterance history entered within a specified first time in a different session, and/or a previous user utterance history entered within a first distance and within a specified second time in a different session, the voice assistant system may determine the user intent and/or the execution device without an additional user utterance based on a user utterance history included in the context information, and may provide a voice assistant service based thereon.

FIG. 11 is a block diagram of an electronic device, according to an embodiment.

According to an embodiment, the electronic device 1100 (e.g., the voice assistant server 120 of FIG. 1, the electronic device 1100 of FIG. 11, the server 1408 of FIG. 14, or the intelligent server 1600 of FIG. 15) may include a communication circuit 1110, a memory 1120, and a processor 1130.

According to an embodiment, the communication circuit 1110 may transmit and receive information and/or data with an external device. For example, the communication circuit 1110 may receive a voice input corresponding to a user utterance from a first external device (e.g., a mobile terminal) (e.g., the electronic device 1401 of FIG. 14 or the user terminal 1501 of FIGS. 15 to 17). The communication circuit 1110 may transmit a message for prompting a user utterance (or a command for prompting a user utterance) to the first external device. The communication circuit 1110 may transmit a voice command generated based on information related to the user utterance to a second external device (e.g., an loT server) (e.g., the loT server 130 of FIG. 1). The communication circuit 1110 may transmit an execution request to the loT server and may receive an execution response from the loT server. The communication circuit 1110 may receive, from the loT server, information about at least one IoT device managed by the loT server.

According to an embodiment, the memory 1120 may store instructions for controlling, when executed by the processor 1130, an operation of an electronic device. The memory 1120 may store information and/or data related to the operation of the electronic device. For example, the memory 1120 may store context information related to a user utterance history. The context information may include the user utterance history (e.g., session information, execution device information, intent, timestamp, and/or location information related to the user utterance).

According to an embodiment, the processor 1130 may receive a voice input corresponding to the user utterance from the first external device. For example, the user utterance may include a wake-up word for activating a voice assistant system. For example, a user utterance may be a follow-up utterance to an existing session, or may be an utterance for starting a new session.

The processor 1130 may identify, from the voice input, a session corresponding to the user utterance, user intent, and information related to at least one second external device (e.g., an IoT device) related to an operation corresponding to the user intent. For example, the processor 1130 may identify session identification information (e.g., session ID), execution device information (e.g., device ID and/or device type), intent, a timestamp, and/or a location (e.g., a location of the first external device) where the user utterance is received, which are related to the user utterance.

The processor 1130 may update at least one of the user intent and the information related to the at least one second external device based on context information related to a pre-stored user utterance history. For example, the user utterance history may include session information, user intent information, execution device information, time information, and/or location information for each user utterance.

The processor 1130 may determine whether at least one user utterance history corresponding to a session the same as the user utterance is present in the context information, based on the identified session information. The processor 1130 may update at least one of user intent and information related to at least one second external device based on at least one user utterance history corresponding to the same session as the user utterance. For example, the processor 1130 may identify a user utterance history including execution device information matching the information related to the at least one second external device among at least one user utterance history corresponding to the same session as the user utterance, and may update the information related to the at least one second external device based on the execution device information included in the identified user utterance history. The processor 1130 may not update the information related to the at least one second external device when the user utterance history, which includes the execution device information matching the information related to the at least one second external device, from among the at least one user utterance history corresponding to the same session is not present. For example, the processor 1130 may identify a user utterance history, which includes execution device information corresponding to the information related to the at least one second external device and user intent information related to user intent identified from a user utterance, from among at least one user utterance history corresponding to the same session as the user utterance and may update the user intent related to the user utterance based on the user intent information included in the identified user utterance history. For example, the processor 1130 may update the user intent based on the last stored user utterance history among at least one user utterance history, which belongs to the same session as the user utterance and which is included in the context information.

According to an embodiment, when there is no user utterance history belonging to the same session as the user utterance in the context information, the processor 1130 may identify a user utterance history, which belongs to a different session from the user utterance but has a timestamp within the specified first time from the time point of the user utterance. For example, the processor 1130 may update information (e.g., at least one of user intent and information related to at least one second external device) related to the user utterance based on the identified user utterance history.

According to an embodiment, when there is no user utterance history, which belongs to the same session as the user utterance and has a timestamp within a specified first time from the time point of the user utterance, in the context information, the processor 1130 may identify a user utterance history, which belongs to a different session from the user utterance but has a timestamp within a specified second time from the time point of the user utterance and has location information within a specified distance from a user utterance location. The processor 1130 may update information (e.g., at least one of the user intent and information related to at least one second external device) related to the user utterance based on the identified user utterance history.

According to an embodiment, the processor 1130 may determine whether the user utterance history (e.g., a user utterance history belonging to the same session as the user utterance, a user utterance history, which belongs to a different session from the user utterance but has a timestamp within a specified first time from the time point (e.g., timestamp) of the user utterance, and/or a user utterance history, which belongs to a different session from the user utterance but has a timestamp within a specified second time from the time point (e.g., timestamp) of the user utterance and has location information within a specified distance from the user utterance location) in the identified context information is suitable for updating information related to the user utterance. For example, the processor 1130 may search for device information related to a user utterance and/or information of a device corresponding to intent based on information of a second external device (e.g., an loT device) received from a third external device (e.g., an loT server). The processor 1130 may determine whether the user utterance history is suitable for updating information related to the user utterance, by comparing the search result with the user utterance history in the identified context information. For example, when the search result includes pieces of candidate data (e.g., pieces of execution device candidate information and/or a plurality of intent candidates), the processor 1130 may determine whether it is possible to specify the execution device and/or intent related to the user utterance from the pieces of candidate data by using the user utterance history in the identified context information. When the user utterance history in the identified context information is suitable for updating information related to the user utterance, the processor 1130 may update information related to the user utterance (e.g., user intent and/or information (e.g., execution device information) related to at least one second external device).

The processor 1130 may generate a command for executing the operation based on the user intent and the information related to the at least one second external device. For example, the processor 1130 may generate a voice command based on the user intent and the information (e.g., execution device information) related to the second external device and may transmit the voice command to the third external device (e.g., an IoT server). For example, the third external device may be a device that manages at least one second external device. For example, the processor 1130 may receive, from the third external device, information about the result of the second external device (e.g., an execution device), which corresponds to the user utterance and which performs an operation corresponding to the user intent.

When generating an incomplete (unclear) voice command (e.g., fails to specify user intent and/or an execution device that performs an operation corresponding to the user intent), the processor 1130 may generate a natural language message for prompting an additional user utterance before transmitting the voice command to the third external device, and may provide the natural language message to the user through the first external device. For example, when obtaining a voice input corresponding to an additional user utterance, the processor 1130 may update the voice command based on the additional user utterance. For example, the processor 1130 may update the voice command so as to explicitly specify the user intent and/or the execution device that performs the operation corresponding to the user intent based on the additional user utterance.

The processor 1130 may update context information based on information related to a session, user intent, and at least one second external device. For example, the processor 1130 may update the context information based on information related to a user utterance and/or information about the result of performing an operation corresponding to the user intent received from the third external device. For example, the processor 1130 may store a user utterance history (e.g., a session, an execution device, intent, a timestamp, and/or location information related to the user utterance) in the context information.

According to an embodiment, the electronic device may specify the execution device and user intent related to the user utterance by updating execution device information and/or user intent related to an incomplete or unclear user utterance based on context information related to a pre-stored user utterance history, thereby relatively increasing the accuracy, recognition rate, and/or efficiency of a speech recognition assistant service and enhancing a user's convenience.

According to an embodiment, an electronic device may include a communication circuit, a memory, and a processor.

According to an embodiment, the processor may be configured to receive a voice input corresponding to a user utterance from a first external device through the communication circuit.

According to an embodiment, the processor may be configured to identify, from the voice input, a session corresponding to the user utterance, user intent, and information related to at least one second external device related to an operation corresponding to the user intent.

According to an embodiment, the processor may be configured to update at least one of the user intent and the information related to the at least one second external device based on context information related to a pre-stored user utterance history.

According to an embodiment, the processor may be configured to generate a command for executing the operation based on the user intent and the information related to the at least one second external device.

According to an embodiment, the processor may be configured to update the context information based on the session, the user intent, and the information related to the at least one second external device.

According to an embodiment, the user utterance history may include at least one of session information, user intent information, execution device information, time information, and location information for each user utterance.

According to an embodiment, the processor may be configured to determine whether at least one user utterance history corresponding to a session the same as the user utterance is present in the context information, based on the identified session information.

According to an embodiment, the processor may be configured to update at least one of the user intent and the information related to the at least one second external device based at least partly on the determination.

According to an embodiment, the processor may be configured to identify a user utterance history, which includes execution device information matching the information related to the at least one second external device, from among the at least one user utterance history corresponding to the same session when the at least one user utterance history corresponding to the same session is present.

According to an embodiment, the processor may be configured to update the information related to the at least one second external device based on the matched execution device information included in the identified user utterance history.

According to an embodiment, the processor may be configured not to update the information related to the at least one second external device when the user utterance history, which includes the execution device information matching the information related to the at least one second external device, from among the at least one user utterance history corresponding to the same session is not present.

According to an embodiment, the processor may be configured to identify a user utterance history, which includes execution device information corresponding to the information related to the at least one second external device and user intent information related to the user intent, from among the at least one user utterance history corresponding to the same session when the at least one user utterance history corresponding to the same session is present.

According to an embodiment, the processor may be configured to update the user intent based on the user intent information included in the identified user utterance history.

According to an embodiment, the processor may be configured to update the user intent when the identified user utterance history is a user utterance history, which is last stored, from among the at least one user utterance history.

According to an embodiment, the processor may be configured not to update the user intent when the identified user utterance history is not the user utterance history, which is last stored, from among the at least one user utterance history.

According to an embodiment, the processor may be configured to identify a user utterance history including time information corresponding within a specified first time from a time point of the user utterance, based on time information included in the user utterance history when the user utterance history corresponding to the same session is not present.

According to an embodiment, the processor may be configured to update the user intent or the information related to the at least one second external device based on the user utterance history including the time information corresponding within the specified first time.

According to an embodiment, the processor may be configured to identify a user utterance history including time information corresponding within a specified second time from the time point of the user utterance, and location information corresponding within a specified distance from a location of the user utterance when the user utterance history including the time information belonging within the specified first time from the time point of the user utterance is not present.

According to an embodiment, the processor may be configured to update the user intent or the information related to the at least one second external device based on a user utterance history including time information corresponding within a specified second time, and the location information.

According to an embodiment, the processor may be configured to transmit the command to the at least one second external device or a third external device connected to the at least one second external device.

According to an embodiment, the processor may be configured to generate a message for prompting an additional user utterance for specifying the operation or the execution device when failing to specify the operation or an execution device for performing the operation based on the user intent and the information related to the at least one second external device related to the operation corresponding to the user intent.

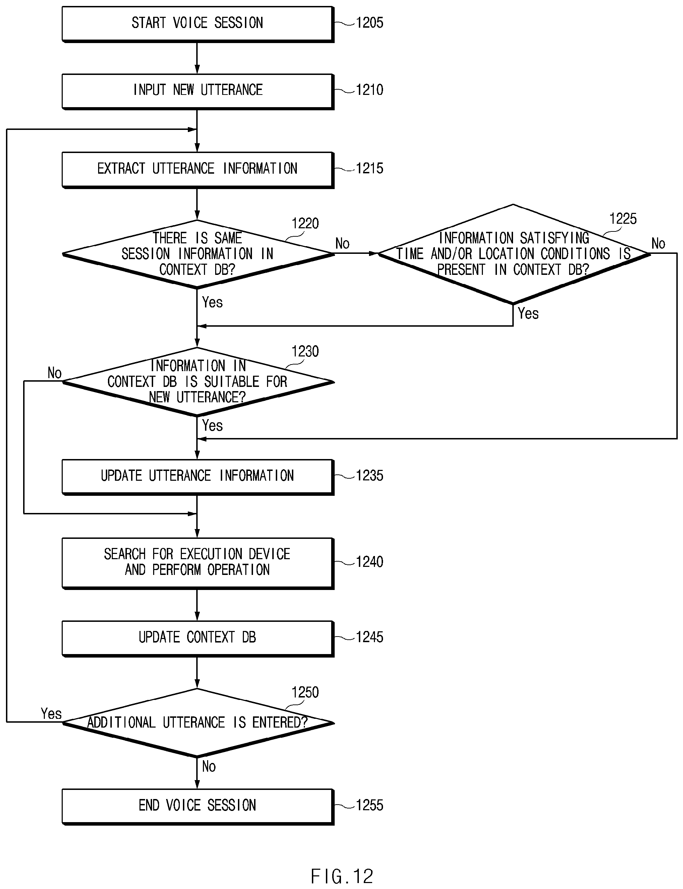

FIG. 12 is a flowchart of a method for providing a voice assistant service of an electronic device, according to an embodiment.

Hereinafter, each of operations in an embodiment may be sequentially performed, but is not necessarily sequentially performed. For example, the order of operations may be changed, and at least two operations may be performed in parallel.

According to an embodiment, it may be understood that operations 1205 to 1255 are performed by a processor (e.g., the processor 1130 of FIG. 11) of an electronic device (e.g., the voice assistant server 120 of FIG. 1, the electronic device 1100 of FIG. 11, the server 1408 of FIG. 14, or the intelligent server 1600 of FIG. 15).

According to an embodiment, in operation 1205, the electronic device (e.g., the voice assistant server 120 of FIG. 1, the electronic device 1100 of FIG. 11, the server 1408 of FIG. 14, or the intelligent server 1600 of FIG. 15) may start a voice session.

According to an embodiment, in operation 1210, the electronic device may identify a new utterance input. For example, the electronic device may receive a voice input corresponding to a new first user utterance from a first external device (e.g., the electronic device 1401 of FIG. 14 or the user terminal 1501 of FIGS. 15 to 17). For example, the first user utterance may be an utterance that indicates the beginning of a conversation with a voice assistant system. For example, the first user utterance may include a wake-up word for activating a voice assistant system. According to an embodiment, operation 1205 may be performed together with operation 1210. For example, the electronic device may identify the start of a new voice session as the new first user utterance is entered after the end of the previous voice session.

According to an embodiment, in operation 1215, the electronic device may extract utterance information. For example, the electronic device may extract information (e.g., a session, an execution device, intent, a timestamp, and/or location information related to the first user utterance) related to the first user utterance from the voice input corresponding to the first user utterance. The electronic device may identify device information, intent, and/or parameters corresponding to the first user utterance. The device information identified (extracted) in operation 1215 may be information indicating a specific device (e.g., device ID) or information indicating the type (e.g., the type of an loT device) of a device.

According to an embodiment, in operation 1220, the electronic device may determine whether there is session information the same as the first user utterance in a context database (context DB) related to the pre-stored user utterance history. For example, the context DB may include a user utterance history prior to a new user utterance (e.g., the first user utterance). For example, the user utterance history may include a session, an execution device, intent, a timestamp, and/or location information related to the previous user utterance. When there is a user utterance history in the context DB belonging to the same session as the first user utterance (operation 1220 - Yes), the electronic device may perform operation 1230. When there is no user utterance history in the context DB belonging to the same session as a second user utterance (operation 1220 - No), the electronic device may perform operation 1225.

According to an embodiment, in operation 1225, the electronic device may determine whether information satisfying specified time and/or location conditions is present in the context DB. According to an embodiment, the electronic device may determine whether there is a user utterance history having a timestamp within a specified first time (e.g., 3 minutes) from a timestamp of the first user utterance in the context DB. For example, when a user utterance history having the timestamp within the specified first time from the timestamp of the first user utterance is present in the context DB (operation 1225 - Yes), the electronic device may perform operation 1230. When a user utterance history having the timestamp within the specified first time from the timestamp of the first user utterance is not present in the context DB (operation 1225 - No), the electronic device may perform operation 1235. According to an embodiment, the electronic device may determine whether a user utterance history, which has the timestamp within a specified second time (e.g., 10 minutes) from the timestamp of the first user utterance and has location information within a specified distance (e.g., 100 m) from a location of the first user utterance, is present in the context DB. For example, when a user utterance history, which has a timestamp within the specified second time the timestamp of the first user utterance and has the location information within the specified distance from the location of the first user utterance, is present in the context DB (operation 1225 - Yes), the electronic device may perform operation 1230. When a user utterance history, which has the timestamp within the specified second time from the timestamp of the first user utterance and has the location information within the specified distance from the location of the first user utterance, is not present in the context DB (operation 1225 - No), the electronic device may perform operation 1235.

According to an embodiment, in operation 1230, the electronic device may determine whether information in the context DB is suitable for a new utterance (e.g., the first user utterance). For example, the electronic device may determine whether the user utterance history in the context DB is suitable information (e.g., execution device information and/or intent) for updating information related to the first user utterance. For example, the electronic device may search for device information related to the first user utterance and/or information of a device corresponding to the intent based on information extracted in operation 1215. For example, the electronic device may search for device information related to the first user utterance and/or information (hereinafter referred to as a "search result") of a device corresponding to intent based on information of a third external device (e.g., an loT device) received from a second external device (e.g., an IoT server). The electronic device may determine whether the information in the context DB is suitable for updating information related to the first user utterance, by comparing the search result with the information in the context DB identified in operation 1220 or operation 1225. For example, when the search result includes pieces of candidate data (e.g., pieces of execution device candidate information and/or a plurality of intent candidates), the electronic device may determine whether it is possible to specify the execution device and/or intent related to the first user utterance from the pieces of candidate data by using the information in the context DB. For example, when the information in the context DB is suitable for the first user utterance (operation 1230 - Yes), the electronic device may perform operation 1235. When the information in the context DB is not suitable for the first user utterance (operation 1230 - No), the electronic device may skip operation 1235 and perform operation 1240.

According to an embodiment, in operation 1235, the electronic device may update utterance information. For example, the electronic device may update information related to the first user utterance based on at least some of the information included in the context DB. For example, the electronic device may update the execution device and/or intent related to the first user utterance based on the user utterance history included in the context DB.

According to an embodiment, in operation 1240, the electronic device may search for the execution device and may allow the execution device to perform at least some of an operation corresponding to the first user utterance. For example, the electronic device may generate a voice command to be transmitted to a second external device (e.g., an loT server) based on information related to the first user utterance. For example, the voice command may include at least execution device information and/or intent. The electronic device may transmit an execution request including a voice command to a second external device. The second external device may allow a third external device (e.g., an loT device) specified as an execution device, which is managed by the second external device, to perform an operation corresponding to the intent in response to the execution request. The electronic device may receive an execution response (e.g., the result of performing an operation corresponding to the execution request) from the second external device.

According to an embodiment, in operation 1245, the electronic device may update the context DB. For example, the electronic device may store information related to the first user utterance in the context DB. For example, the electronic device may store a session, an execution device, intent, a timestamp, and/or location information related to a first user utterance as a first user utterance history in the context DB.

According to an embodiment, in operation 1250, the electronic device may identify whether an additional utterance is entered. For example, when a voice input corresponding to an additional utterance (e.g., a second user utterance) is received from the first external device (action 1250 - Yes), the electronic device may perform operation 1215 on the voice input corresponding to the additional utterance. When the voice input corresponding to the additional utterance is not received during the specified time or longer (operation 1250 - No), the electronic device may perform operation 1255.

According to an embodiment, in operation 1255, the electronic device may identify the end of a voice session. For example, when an additional utterance is not entered during a specified time or longer from the last user utterance (e.g., the first user utterance), the electronic device may end the voice session.

According to an embodiment, at least some of the operations of FIG. 12 may be omitted, or at least one other operation (e.g., at least some of the operations of FIGS. 2 to 9, or 13) may be added, and the order of at least some of the operations may be changed.

According to an embodiment, the electronic device may specify an execution device and intent related to the user utterance by updating information related to an incomplete or unclear user utterance based on context DB related to a pre-stored user utterance history, thereby increasing the accuracy, recognition rate, and/or efficiency of a speech recognition assistant service and enhancing a user's convenience.

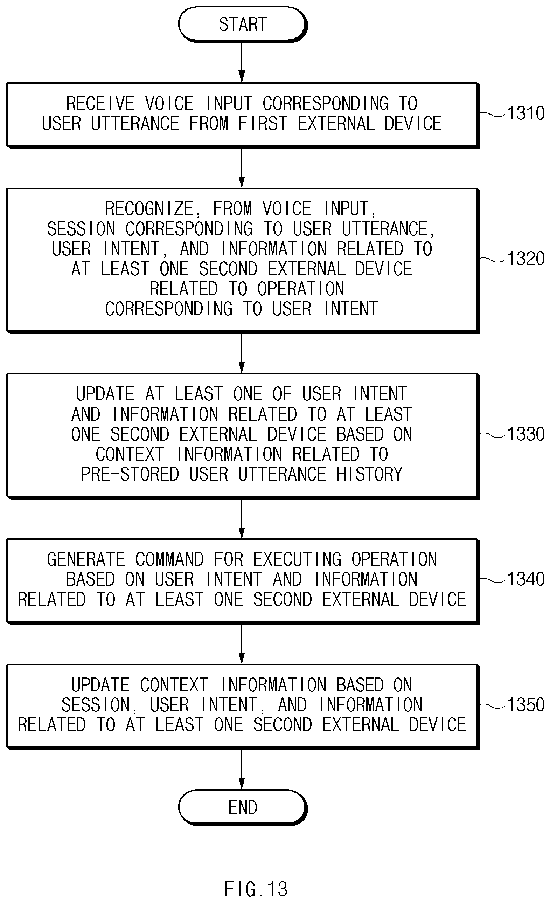

FIG. 13 is a flowchart of a method for providing a voice assistant service of an electronic device, according to an embodiment.

Hereinafter, each of operations in an embodiment may be sequentially performed, but is not necessarily sequentially performed. For example, the order of operations may be changed, and at least two operations may be performed in parallel.

According to an embodiment, it may be understood that operations 1310 to 1350 are performed by a processor (e.g., the processor 1130 of FIG. 11) of an electronic device (e.g., the voice assistant server 120 of FIG. 1, the electronic device 1100 of FIG. 11, the server 1408 of FIG. 14, or the intelligent server 1600 of FIG. 15).

According to an embodiment, in operation 1310, an electronic device (e.g., the voice assistant server 120 of FIG. 1, the electronic device 1100 of FIG. 11, the server 1408 of FIG. 14, or the intelligent server 1600 of FIG. 15) may receive a voice input corresponding to a user utterance from a first external device (e.g., the electronic device 1401 of FIG. 14 or the user terminal 1501 of FIGS. 15 to 17). For example, the user utterance may include a wake-up word for activating a voice assistant system (voice assistant function). For example, a user utterance may be a follow-up utterance to an existing session, or may be an utterance for starting a new session.

According to an embodiment, in operation 1320, the electronic device may identify, from the voice input, a session corresponding to the user utterance, user intent, and information related to at least one second external device (e.g., an loT device) related to an operation corresponding to the user intent. For example, the electronic device may identify session identification information (e.g., session ID), execution device information (e.g., device ID and/or device type), intent, a timestamp, and/or a location (e.g., a location of the first external device) where the user utterance is received, which are related to the user utterance.

According to an embodiment, in operation 1330, the electronic device may update at least one of the user intent and the information related to the at least one second external device based on context information related to a pre-stored user utterance history. For example, the user utterance history may include session information, user intent information, execution device information, time information, and/or location information for each user utterance.

The electronic device may determine whether at least one user utterance history corresponding to a session the same as the user utterance is present in the context information, based on the session information identified in operation 1320. The electronic device may update at least one of user intent and information related to at least one second external device based on at least one user utterance history corresponding to the same session as the user utterance. For example, the electronic device may identify a user utterance history including execution device information matching the information related to the at least one second external device among at least one user utterance history corresponding to the same session as the user utterance, and may update the information related to the at least one second external device based on the execution device information included in the identified user utterance history. The electronic device may not update the information related to the at least one second external device when the user utterance history, which includes the execution device information matching the information related to the at least one second external device, from among the at least one user utterance history corresponding to the same session is not present. For example, the electronic device may identify a user utterance history, which includes execution device information corresponding to the information related to the at least one second external device and user intent information related to user intent identified from a user utterance, from among at least one user utterance history corresponding to the same session as the user utterance and may update the user intent related to the user utterance based on the user intent information included in the identified user utterance history. For example, the electronic device may update the user intent based on the last stored user utterance history among at least one user utterance history, which belongs to the same session as the user utterance and which is included in the context information.

According to an embodiment, when there is no user utterance history belonging to the same session as the user utterance in the context information, the electronic device may identify a user utterance history, which belongs to a different session from the user utterance but has a timestamp within the specified first time from the time point of the user utterance. For example, the electronic device may update information (e.g., at least one of user intent and information related to at least one second external device) related to the user utterance based on the identified user utterance history.

According to an embodiment, when there is no user utterance history, which belongs to the same session as the user utterance and has a timestamp within a specified first time from the time point of the user utterance, in the context information, the electronic device may identify a user utterance history, which belongs to a different session from the user utterance but has a timestamp within a specified second time from the time point of the user utterance and has location information within a specified distance from a user utterance location. The electronic device may update information (e.g., at least one of user intent and information related to at least one second external device) related to the user utterance based on the identified user utterance history.

According to an embodiment, the electronic device may determine whether the user utterance history (e.g., a user utterance history belonging to the same session as the user utterance, a user utterance history, which belongs to a different session from the user utterance but has a timestamp within a specified first time from the time point (e.g., timestamp) of the user utterance, and/or a user utterance history, which belongs to a different session from the user utterance but has a timestamp within a specified second time from the time point (e.g., timestamp) of the user utterance and has location information within a specified distance from the user utterance location) in the identified context information is suitable for updating information related to the user utterance. For example, the electronic device may search for device information related to a user utterance and/or information of a device corresponding to intent based on information of a second external device (e.g., an loT device) received from a third external device (e.g., an loT server). The electronic device may determine whether the user utterance history is suitable for updating information related to the user utterance, by comparing the search result with the user utterance history in the identified context information. For example, when the search result includes pieces of candidate data (e.g., pieces of execution device candidate information and/or a plurality of intent candidates), the electronic device may determine whether it is possible to specify the execution device and/or intent related to the user utterance from the pieces of candidate data by using the user utterance history in the identified context information. When the user utterance history in the identified context information is suitable for updating information related to the user utterance, the electronic device may update information related to the user utterance (e.g., user intent and/or information (e.g., execution device information) related to at least one second external device).

According to an embodiment, in operation 1340, the electronic device may generate a command for executing the operation based on the user intent and the information related to the at least one second external device. For example, the electronic device may generate a voice command based on the user intent and the information (e.g., execution device information) related to the second external device and may transmit the voice command to the third external device (e.g., an loT server). For example, the third external device may be a device that manages at least one second external device. For example, the electronic device may receive, from the third external device, information about the result of the second external device (e.g., an execution device), which corresponds to the user utterance and which performs an operation corresponding to the user intent.

When generating an incomplete (unclear) voice command (e.g., fails to specify user intent and/or an execution device that performs an operation corresponding to the user intent), the electronic device may generate a natural language message for prompting an additional user utterance before transmitting the voice command to the third external device, and may provide the natural language message to the user through the first external device. For example, when obtaining a voice input corresponding to an additional user utterance, the electronic device may update the voice command based on the additional user utterance. For example, the electronic device may update the voice command so as to explicitly specify the user intent and/or the execution device that performs the operation corresponding to the user intent based on the additional user utterance.

According to an embodiment, in operation 1350, the electronic device may update context information based on information related to a session, user intent, and at least one second external device. For example, the electronic device may update the context information based on information related to a user utterance and/or information about the result of performing an operation corresponding to the user intent received from the third external device. For example, the electronic device may store a user utterance history (e.g., a session, an execution device, intent, a timestamp, and/or location information related to the user utterance) in the context information.

According to an embodiment, at least some of the operations of FIG. 13 may be omitted, or at least one other operation (e.g., at least some of the operations of FIGS. 2 to 9, or 12) may be added, and the order of at least some of the operations may be changed.

According to an embodiment, the electronic device may specify the execution device and user intent related to the user utterance by updating execution device information and/or user intent related to an incomplete or unclear user utterance based on context information related to a pre-stored user utterance history, thereby relatively increasing the accuracy, recognition rate, and/or efficiency of a speech recognition assistant service and enhancing a user's convenience.

According to an embodiment, a method for providing a voice assistant service for an electronic device may include receiving a voice input corresponding to a user utterance from a first external device.

According to an embodiment, the method may include recognizing, from the voice input, a session corresponding to the user utterance, user intent, and information related to at least one second external device related to an operation corresponding to the user intent.

According to an embodiment, the method may include updating at least one of the user intent and the information related to the at least one second external device based on context information related to a pre-stored user utterance history.

According to an embodiment, the method may include generating a command for executing the operation based on the user intent and the information related to the at least one second external device.

According to an embodiment, the method may include updating the context information based on the session, the user intent, and the information related to the at least one second external device.

According to an embodiment, the user utterance history may include at least one of session information, user intent information, execution device information, time information, and location information for each user utterance.

According to an embodiment, the updating of the at least one of the user intent and the information related to the at least one second external device may include determining whether at least one user utterance history corresponding to a session the same as the user utterance is present in the context information, based on the identified session information, and updating at least one of the user intent and the information related to the at least one second external device based at least partly on the determination.

According to an embodiment, the updating of the at least one of the user intent and the information related to the at least one second external device may include recognizing a user utterance history including execution device information matching the information related to the at least one second external device among at least one user utterance history corresponding to the same session as the user utterance, and updating the information related to the at least one second external device based on the execution device information included in the identified user utterance history.

According to an embodiment, the method may include not updating the information related to the at least one second external device when the user utterance history, which includes the execution device information matching the information related to the at least one second external device, from among the at least one user utterance history corresponding to the same session is not present.

According to an embodiment, the determining of whether the user utterance history is present may include recognizing a user utterance history, which includes execution device information corresponding to the information related to the at least one second external device and user intent information related to the user intent, from among the at least one user utterance history corresponding to the same session when the at least one user utterance history corresponding to the same session is present.

According to an embodiment, the updating of the at least one of the user intent and the information related to the at least one second external device may include updating the user intent based on the user intent information included in the identified user utterance history.

According to an embodiment, the method may include recognizing a user utterance history including time information corresponding within a specified first time from a time point of the user utterance, based on time information included in the user utterance history when the user utterance history corresponding to the same session is not present, and updating the user intent or the information related to the at least one second external device based on the user utterance history including the time information corresponding within the specified first time.

According to an embodiment, the method may include recognizing a user utterance history including time information corresponding within a specified second time from the time point of the user utterance, and location information corresponding within a specified distance from a location of the user utterance when the user utterance history including the time information belonging within the specified first time from the time point of the user utterance is not present, and updating the user intent or the information related to the at least one second external device based on a user utterance history including time information corresponding within a specified second time, and the location information.

According to an embodiment, the method may include generating a message for prompting an additional user utterance for specifying the operation or the execution device when failing to specify the operation or an execution device for performing the operation based on the user intent and the information related to the at least one second external device related to the operation corresponding to the user intent.

FIG. 14 is a block diagram of an electronic device 1401 in a network environment 1400, according to various embodiments. Referring to FIG. 14, the electronic device 1401 in the environment information 1400 may communicate with an electronic device 1402 over a first network 1498 (e.g., a short range wireless communication network) or may communicate with at least one of an electronic device 1404 or a server 1408 over a second network 1499 (e.g., a long distance wireless communication network). The electronic device 1401 may communicate with the electronic device 1404 through the server 1408. According to an embodiment, the electronic device 1401 may include a processor 1420, a memory 1430, an input module 1450, a sound output module 1455, a display module 1460, an audio module 1470, a sensor module 1476, an interface 1477, a connecting terminal 1478, a haptic module 1479, a camera module 1480, a power management module 1488, a battery 1489, a communication module 1490, a subscriber identification module 1496, or an antenna module 1497. In any embodiment, the electronic device 1401 may not include at least one (e.g., the connecting terminal 1478) of the above-described components or may further include one or more other components. In some embodiments, some (e.g., the sensor module 1476, the camera module 1480, or the antenna module 1497) of these components may be integrated into a single component (e.g., the display module 1460).

For example, the processor 1420 may execute software (e.g., a program 1440) to control at least another component (e.g., hardware or software component) of the electronic device 1401 connected to the processor 1420, and may process and calculate various types of data. According to an embodiment, as at least part of data processing or calculation, the processor 1420 may store instructions or data received from other components (e.g., the sensor module 1476 or the communication module 1490) into a volatile memory 1432, may process instructions or data stored in the volatile memory 1432, and may store the result data in a nonvolatile memory 1434. According to an embodiment, the processor 1420 may include a main processor 1421 (e.g., a central processing unit or an application processor) and an auxiliary processor 1423 (e.g., a graphic processing unit, a neural processing unit (NPU), an image signal processor, a sensor hub processor, or a communication processor) capable of operating independently or together with the main processor. For example, when the electronic device 1401 includes the main processor 1421 and the auxiliary processor 1423, the auxiliary processor 1423 may be configured to use less power than the main processor 1421 or to be specialized for a specified function. The auxiliary processor 1423 may be implemented separately from the main processor 1421 or as part of the main processor 121.

For example, the auxiliary processor 1423 may control at least part of the functions or states associated with at least one (e.g., the display module 1460, the sensor module 1476, or the communication module 1490) of the components of the electronic device 1401, instead of the main processor 1421 while the main processor 1421 is in an inactive (e.g., sleep) state or together with the main processor 1421 while the main processor 1421 is in an active (e.g., the execution of an application) state. According to an embodiment, the auxiliary processor 1423 (e.g., an image signal processor or a communication processor) may be implemented as a part of operatively associated other components (e.g., the camera module 1480 or the communication module 1490). According to an embodiment, the auxiliary processor 1423 (e.g., a neural network processing unit) may include a hardware structure specialized to process an artificial intelligence model. The artificial intelligence model may be generated through machine learning. For example, the learning may be performed in the electronic device 1401, in which an artificial intelligence model is performed, or may be performed through a separate server (e.g., the server 1408). For example, the learning algorithm may include supervised learning, unsupervised learning, semi-supervised learning, or reinforcement learning, but is not limited to the above example. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more of the networks, but may not be limited to the above-described example. In addition to a hardware structure, additionally or alternatively, the artificial intelligence model may include a software structure.

The memory 1430 may store various pieces of data used by at least one component (e.g., the processor 1420 or the sensor module 1476) of the electronic device 1401. For example, data may include software (e.g., the program 1440) and input data or output data for instructions associated with the software. The memory 1430 may include the volatile memory 1432 or the nonvolatile memory 1434.

The program 1440 may be stored in the memory 1430 as software, and may include, for example, an operating system 1442, a middleware 1444, or an application 1446.

The input module 1450 may receive instructions or data to be used for the component (e.g., the processor 1420) of electronic device 1401, from the outside (e.g., a user) of the electronic device 1401. The input module 1450 may include, for example, a microphone, a mouse, a keyboard, a key (e.g., a button), or a digital pen (e.g., a stylus pen).

The sound output module 1455 may output a sound signal to the outside of the electronic device 1401. The sound output module 1455 may include, for example, a speaker or a receiver. The speaker may be used for a general purpose, such as multimedia play or recording play. The receiver may be used to receive an incoming call. According to an embodiment, the receiver may be implemented separately from the speaker or may be implemented as a part of the speaker.

The display module 1460 may visually provide information to the outside (e.g., the user) of the electronic device 1401. The display module 1460 may include, for example, a display, a hologram device, or a control circuit for controlling a projector and a corresponding device. According to an embodiment, the display module 1460 may include a touch sensor configured to sense a touch, or a pressure sensor configured to measure the strength of force generated by the touch.

The audio module 1470 may convert sound to an electrical signal, or reversely, may convert an electrical signal to sound. According to an embodiment, the audio module 1470 may obtain sound through the input module 1450, or may output sound through the sound output module 1455, or through an external electronic device (e.g., the electronic device 1402) (e.g., a speaker or a headphone) directly or wirelessly connected with the electronic device 1401.

The sensor module 1476 may sense an operation state (e.g., power or a temperature) of the electronic device 1401 or an external environment state (e.g., a user state), and may generate an electrical signal or a data value corresponding the sensed state. According to an embodiment, the sensor module 1476 may include, for example, a gesture sensor, a grip sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illumination sensor.

The interface 1477 may support one or more specified protocols that may be used to directly and wirelessly connect the electronic device 1401 with an external electronic device (e.g., the electronic device 1402). According to an embodiment, the interface 1477 may include, for example, a high definition multimedia interface (HDMI), a universal serial bus (USB) interface, a secure digital (SD) card interface, or an audio interface.

The connecting terminal 1478 may include a connector that may allow the electronic device 1401 to be physically connected with an external electronic device (e.g., the electronic device 1402). According to an embodiment, the connecting terminal 1478 may include, for example, a HDMI connector, an USB connector, an SD card connector, or an audio connector (e.g., a headphone connector).

The haptic module 1479 may convert an electrical signal to a mechanical stimulation (e.g., vibration or movement) or an electrical stimulation which the user may perceive through the sense of touch or the sense of movement. According to an embodiment, the haptic module 1479 may include, for example, a motor, a piezoelectric sensor, or an electrical stimulation device.

The camera module 1480 may shoot a still image or a video image. According to an embodiment, the camera module 1480 may include one or more lenses, image sensors, image signal processors, or flashes (or electrical flashes).

The power management module 1488 may manage the power which is supplied to the electronic device 1401. According to an embodiment, the power management module 1488 may be implemented, for example, as at least part of a power management integrated circuit (PMIC).

The battery 1489 may power at least one component of the electronic device 1401. According to an embodiment, the battery 1489 may include, for example, a primary cell not recharged, a secondary cell rechargeable, or a fuel cell.

The communication module 1490 may establish a direct (or wired) communication channel or a wireless communication channel between the electronic device 1401 and an external electronic device (e.g., the electronic device 1402, the electronic device 1404, or the server 1408) and may perform communication through the established communication channel. The communication module 1490 may include one or more communication processors which are operated independently of the processor 1420 (e.g., an application processor) and support direct (or wired) communication or wireless communication. According to an embodiment, the communication module 1490 may include a wireless communication module 1492 (e.g., a cellular communication module, a short range wireless communication module, or a global navigation satellite system (GNSS) communication module) or a wired communication module 1494 (e.g., a local area network (LAN) communication module or a power line communication module). The corresponding communication module among these communication modules may communicate with an external electronic device 1404 through a first network 1498 (e.g., a short-range communication network such as Bluetooth, wireless fidelity (WiFi) direct or infrared data association (IrDA)) or a second network 1499 (e.g., long-range wireless communication network such as a legacy cellular network, 5G networks, next-generation communication networks, Internet, or computer networks (e.g., LAN or WAN)). The above-described kinds of communication modules may be integrated in one component (e.g., a single chip) or may be implemented with a plurality of components (e.g., a plurality of chips) which are independent of each other. The wireless communication module 1492 may identify or authenticate the electronic device 1401 within a communication network, such as the first network 1498 or the second network 1499, by using subscriber information (e.g., international mobile subscriber identity (IMSI)) stored in the subscriber identification module 1496.

The wireless communication module 1492 may support a 5G network and a next-generation communication technology after a 4G network, for example, a new radio (NR) access technology. The NR access technology may support enhanced mobile broadband (eMBB), massive machine type communications (mMTC), or ultra-reliable and low-latency communications (URLLC). For example, the wireless communication module 1492 may support a high frequency band (e.g., mmWave band) to achieve a high data transfer rate. The wireless communication module 1492 may support various technologies for securing performance in a high frequency band, for example, technologies such as beamforming, massive multiple-input and multiple-output (massive MIMO), full dimensional MIMO (FD-MIMO), an array antenna, analog beam-forming, and a large scale antenna. The wireless communication module 1492 may support various requirements regulated in the electronic device 1401, an external electronic device (e.g., the electronic device 1404) or a network system (e.g., the second network 1499). According to an embodiment, the wireless communication module 1492 may support peak data rate (e.g., 20 Gbps or more) for eMBB implementation, loss coverage (e.g., 164 dB or less) for mMTC implementation, or U-plane latency (e.g., downlink (DL) of 0.5 ms or less and uplink (UL) of 0.5 ms or less, or round trip of 1 ms or less) for URLLC implementation.

The antenna module 1497 may transmit a signal or a power to the outside (e.g., an external electronic device) or may receive a signal or a power from the outside. According to an embodiment, the antenna module 1497 may include an antenna including a radiator formed of a conductor or a conductive pattern formed on a substrate (e.g., PCB). According to one embodiment, the antenna module 1497 may include a plurality of antennas (e.g., an array antenna). In this case, at least one antenna suitable for a communication scheme used in a communication network such as the first network 1498 or the second network 1499 may be selected, for example, by the communication module 1490 from the plurality of antennas. The signal or power may be exchanged between the communication module 1490 and an external electronic device through the selected at least one antenna or may be received from the external electronic device through the selected at least one antenna and the communication module 190. According to some embodiments, other parts (e.g., radio frequency integrated circuit (RFIC)) may be additionally formed as a part of the antenna module 1497 in addition to the radiator.

According to various embodiments, the antenna module 1497 may form an mmWave antenna module. According to an embodiment, the mmWave antenna module may include a printed circuit board (PCB), an radio frequency integrated circuit (RFIC), and a plurality of antennas (e.g., an array antenna). The RFIC may be disposed on or adjacent to a first surface (e.g., a bottom surface) of the PCB and may support a specified high frequency band (e.g., mmWave band). The plurality of antennas may be disposed on or adjacent to a second surface (e.g., a top surface or a side surface) of the PCB and may transmit or receive a signal in the specified high frequency band.

At least some of the components may be connected to each other through a communication scheme (e.g., a bus, a general purpose input and output (GPIO), a serial peripheral interface (SPI), or a mobile industry processor interface (MIPI)) between peripheral devices and may exchange signals (e.g., commands or data) with each other.

According to an embodiment, the command or data may be transmitted or received between the electronic device 1401 and the external electronic device 1404 through the server 1408 connected to the second network 1499. Each of the external electronic device 1402 or 104 may be a device of which the type is the same as or different from that of the electronic device 1401. According to an embodiment, all or a part of operations to be executed by the electronic device 1401 may be executed in one or more external electronic devices among the external electronic devices 1402, 104, or 108. For example, when the electronic device 1401 needs to perform any function or service automatically or in response to a request from the user or any other device, the electronic device 1401 may additionally request one or more external electronic devices to perform at least part of the function or service, instead of internally executing the function or service. The one or more external electronic devices which receive the request may execute at least a part of the function or service thus requested or an additional function or service associated with the request, and may provide a result of the execution to the electronic device 1401. The electronic device 1401 may process the result as it is or additionally, and may provide a result of the processing as at least a part of the response to the request. To this end, for example, cloud computing, distributed computing, mobile edge computing (MEC), or client-server computing may be used. For example, the electronic device 1401 may provide an ultra-low latency service by using distributed computing or mobile edge computing. In another embodiment, the external electronic device 1404 may include an Internet of Things (IoT) device. The server 1408 may be an intelligent server using machine learning and/or a neural network. According to an embodiment, the external electronic device 1404 or the server 1408 may be included in the second network 1499. The electronic device 1401 may be applied to an intelligent service (e.g., a smart home, a smart city, a smart car, or a healthcare) based on 5G communication technology and loT-related technology.

FIG. 15 is a block diagram illustrating an integrated intelligence system, according to an embodiment.

Referring to FIG. 15, an integrated intelligence system according to an embodiment may include the user terminal 1501, the intelligent server 1600, and the service server 1700.

The user terminal 1501 (e.g., the electronic device 1401 of FIG. 14) according to an embodiment may be a terminal device (or an electronic device) capable of connecting to the Internet, and may be, for example, a mobile phone, a smartphone, a personal digital assistant (PDA), a notebook computer, a television (TV), a household appliance, a wearable device, a head mounted display (HMD), or a smart speaker.

According to the illustrated embodiment, the user terminal 1501 may include the communication interface 1590, a microphone 1570, the speaker 1555, the display 1560, a memory 1530, and/or a processor 1520. The listed components may be operatively or electrically connected to one another.

The communication interface 1590 (e.g., the communication module 1490 of FIG. 14) may be connected to an external device and may be configured to transmit or receive data to or from the external device. The microphone 1570 (e.g., the audio module 1470 of FIG. 14) may receive a sound (e.g., a user utterance) to convert the sound into an electrical signal. The speaker 1555 (e.g., the sound output module 1455 of FIG. 14) may output the electrical signal as sound (e.g., voice). The display 1560 (e.g., the display module 1460 of FIG. 14) may be configured to display an image or video. The display 1560 according to an embodiment may display the graphic user interface (GUI) of the running app (or an application program).

The display 1560 according to an embodiment may be configured to display an image or a video. The display 1560 according to an embodiment may display the graphic user interface (GUI) of the running app (or an application program). The display 1560 according to an embodiment may receive a touch input through a touch sensor. For example, the display 1560 may receive a text input through the touch sensor of an on-screen keyboard area displayed in the display 1560.

The memory 1530 (e.g., the memory 1430 of FIG. 14) according to an embodiment may store the client module 1531, a software development kit (SDK) 1533, and a plurality of applications. The client module 1531 and the SDK 1533 may constitute a framework (or a solution program) for performing general-purposed functions. Moreover, the client module 1531 or SDK 1533 may constitute a framework for processing a user input (e.g., a voice input, a text input, or a touch input).

The plurality of applications (e.g., 1535a and 1535b) may be programs for performing a specified function. According to an embodiment, the plurality of applications may include a first app 1535a and/or a second app 1535b. According to an embodiment, each of the plurality of applications may include a plurality of actions for performing a specified function. For example, the applications may include an alarm app, a message app, and/or a schedule app. According to an embodiment, the plurality of applications may be executed by the processor 1520 to sequentially execute at least part of the plurality of actions.

According to an embodiment, the processor 1520 may control overall operations of the user terminal 1501. For example, the processor 1520 may be electrically connected to the communication interface 1590, the microphone 1570, the speaker 1555, and the display 1560 to perform a specified operation. For example, the processor 1520 may include at least one processor.

Moreover, the processor 1520 according to an embodiment may execute the program stored in the memory 1530 so as to perform a specified function. For example, according to an embodiment, the processor 1520 may execute at least one of the client module 1531 or the SDK 1533 so as to perform a following operation for processing a user input. The processor 1520 may control operations of the plurality of applications via the SDK 1533. The following actions described as the actions of the client module 1531 or the SDK 1533 may be the actions performed by the execution of the processor 1520.

The client module 1531 according to an embodiment may receive a user input. For example, the client module 1531 may generate a voice signal corresponding to a user utterance detected via the microphone 1570. Alternatively, the client module 1531 may receive a touch input detected through the display 1560. Alternatively, the client module 1531 may receive a text input detected through a keyboard or an on-screen keyboard. Besides, various types of user inputs detected through an input module included in the user terminal 1501 or an input module connected to the user terminal 1501 may be received. The client module 1531 may transmit the received user input to the intelligent server 1600. The client module 1531 may transmit state information of the user terminal 1501 to the intelligent server 1600 together with the received user input. For example, the state information may be execution state information of an app.

According to an embodiment, the client module 1531 may receive a result corresponding to the received user input from the intelligent server 1600. For example, the client module 1531 may receive the result corresponding to the received user input from the intelligent server 1600. The client module 1531 may display the received result on the display 1560. Moreover, the client module 1531 may output the received result as a sound through the speaker 1555.

According to an embodiment, the client module 1531 may receive a plan corresponding to the received user input. The client module 1531 may display, on the display 1560, a result of executing a plurality of actions of an app depending on the plan. For example, the client module 1531 may sequentially display results of executing the plurality of actions on a display and may output a sound through the speaker 1555. As another example, the user terminal 1501 may display only a part of results (e.g., a result of the last action) of executing the plurality of actions on the display and may output a sound through the speaker 1555.

According to an embodiment, the client module 1531 may receive a request for obtaining information necessary to calculate the result corresponding to a voice input, from the intelligent server 1600. For example, the information necessary to calculate the result may be the state information of the user terminal 1501. According to an embodiment, the client module 1531 may transmit the necessary information to the intelligent server 1600 in response to the request.

According to an embodiment, the client module 1531 may transmit, to the intelligent server 1600, information about the result of executing a plurality of actions depending on the plan. The intelligent server 1600 may identify that the received user input is correctly processed, by using the result information.

According to an embodiment, the client module 1531 may include a speech recognition module. According to an embodiment, the client module 1531 may identify a voice input for performing a limited function, via the speech recognition module. For example, the client module 1531 may launch an intelligent app for processing a specific voice input by performing an organic action, in response to a specified voice input (e.g., wake up!).

According to an embodiment, the intelligent server 1600 may receive information associated with a user's voice input from the user terminal 1501 over a network 1599 (e.g., the first network 1498 and/or the second network 1499 of FIG. 14). According to an embodiment, the intelligent server 1600 may convert data associated with the received voice input to text data. According to an embodiment, the intelligent server 1600 may generate at least one plan for performing a task corresponding to the user's voice input, based on the text data.

According to an embodiment, the plan may be generated by an artificial intelligent (AI) system. The Al system may be a rule-based system, or may be a neural network-based system (e.g., a feedforward neural network (FNN) and/or a recurrent neural network (RNN)). Alternatively, the Al system may be a combination of the above-described systems or an Al system different from the above-described system. According to an embodiment, the plan may be selected from a set of predefined plans or may be generated in real time in response to a user's request. For example, the Al system may select at least one plan of the plurality of predefined plans.

According to an embodiment, the intelligent server 1600 may transmit a result according to the generated plan to the user terminal 1501 or may transmit the generated plan to the user terminal 1501. According to an embodiment, the user terminal 1501 may display the result according to the plan on a display. According to an embodiment, the user terminal 1501 may display a result of executing the action according to the plan on the display.

The intelligent server 1600 according to an embodiment may include a front end 1610, a natural language platform 1620, a capsule database 1630, the execution engine 1640, an end user interface 1650, a management platform 1660, a big data platform 1670, or an analytic platform 1680.

The front end 1610 according to an embodiment may receive a user input received by the user terminal 1501 from the user terminal 1501. The front end 1610 may transmit a response corresponding to the user input to the user terminal 1501.

According to an embodiment, the natural language platform 1620 may include the automatic speech recognition (ASR) module 1621, the natural language understanding (NLU) module 1623, a planner module 1625, a natural language generator (NLG) module 1627, and/or the text to speech module (TTS) module 1629.

According to an embodiment, the ASR module 1621 may convert the voice input received from the user terminal 1501 into text data. According to an embodiment, the NLU module 1623 may grasp the intent of the user by using the text data of the voice input. For example, the NLU module 1623 may grasp the intent of the user by performing syntactic analysis or semantic analysis on the user input in a form of text data. According to an embodiment, the NLU module 1623 may grasp the meaning of words extracted from the user input by using linguistic features (e.g., syntactic elements) such as morphemes or phrases and may determine the intent of the user by matching the grasped meaning of the words to the intent. The NLU module 1623 may obtain intent information corresponding to a user utterance. The intent information may be information indicating the user's intent determined by interpreting the text data. The intent information may include information indicating an action or a function that the user wants to execute by using a device.

According to an embodiment, the planner module 1625 may generate the plan by using a parameter and the intent that is determined by the NLU module 1623. According to an embodiment, the planner module 1625 may determine a plurality of domains necessary to perform a task, based on the determined intent. The planner module 1625 may determine a plurality of actions included in each of the plurality of domains determined based on the intent. According to an embodiment, the planner module 1625 may determine the parameter necessary to perform the determined plurality of actions or a result value output by the execution of the plurality of actions. The parameter and the result value may be defined as a concept of a specified form (or class). As such, the plan may include the plurality of actions and/or a plurality of concepts, which are determined by the intent of the user. The planner module 1625 may determine the relationship between the plurality of actions and the plurality of concepts stepwise (or hierarchically). For example, the planner module 1625 may determine the execution sequence of the plurality of actions, which are determined based on the user's intent, based on the plurality of concepts. In other words, the planner module 1625 may determine an execution sequence of the plurality of actions, based on the parameters necessary to perform the plurality of actions and the result output by the execution of the plurality of actions. Accordingly, the planner module 1625 may generate a plan including information (e.g., ontology) about the relationship between the plurality of actions and the plurality of concepts. The planner module 1625 may generate the plan by using information stored in the capsule DB 1630 storing a set of relationships between concepts and actions.

According to an embodiment, the NLG module 1627 may change specified information into information in a text form. The information changed to the text form may be in the form of a natural language speech. The TTS module 1629 according to an embodiment may change information in the text form to information in a voice form.

According to an embodiment, all or part of the functions of the natural language platform 1620 may be also implemented in the user terminal 1501. For example, the user terminal 1501 may include an ASR module and/or an NLU module. The user terminal 1501 may identify the user's voice command and then may transmit text information corresponding to the identified voice command to the intelligent server 1600. For example, the user terminal 1501 may include a TTS module. The user terminal 1501 may receive text information from the intelligent server 1600 and may output the received text information by using voice.

The capsule DB 1630 may store information about the relationship between the actions and the plurality of concepts corresponding to a plurality of domains. According to an embodiment, the capsule may include a plurality of action objects (or action information) and/or concept objects (or concept information) included in the plan. According to an embodiment, the capsule DB 1630 may store the plurality of capsules in a form of a concept action network (CAN). According to an embodiment, the plurality of capsules may be stored in the function registry included in the capsule DB 1630.

The capsule DB 1630 may include a strategy registry that stores strategy information necessary to determine a plan corresponding to a voice input. When there are a plurality of plans corresponding to the user input, the strategy information may include reference information for determining one plan. According to an embodiment, the capsule DB 1630 may include a follow-up registry that stores information of the follow-up action for suggesting a follow-up action to the user in a specified context. For example, the follow-up action may include a follow-up utterance. According to an embodiment, the capsule DB 1630 may include a layout registry storing layout information of information output via the user terminal 1501. According to an embodiment, the capsule DB 1630 may include a vocabulary registry storing vocabulary information included in capsule information. According to an embodiment, the capsule DB 1630 may include a dialog registry storing information about dialog (or interaction) with the user. The capsule DB 1630 may update an object stored via a developer tool. For example, the developer tool may include a function editor for updating an action object or a concept object. The developer tool may include a vocabulary editor for updating a vocabulary. The developer tool may include a strategy editor that generates and registers a strategy for determining the plan. The developer tool may include a dialog editor that creates a dialog with the user. The developer tool may include a follow-up editor capable of activating a follow-up target and editing the follow-up utterance for providing a hint. The follow-up target may be determined based on a target, the user's preference, or an environment condition, which is currently set. According to an embodiment, the capsule DB 1630 may be implemented in the user terminal 1501.

According to an embodiment, the execution engine 1640 may calculate a result by using the generated plan. The end user interface 1650 may transmit the calculated result to the user terminal 1501. Accordingly, the user terminal 1501 may receive the result and may provide the user with the received result. According to an embodiment, the management platform 1660 may manage information used by the intelligent server 1600. According to an embodiment, the big data platform 1670 may collect data of the user. According to an embodiment, the analytic platform 1680 may manage quality of service (QoS) of the intelligent server 1600. For example, the analytic platform 1680 may manage the component and processing speed (or efficiency) of the intelligent server 1600.

According to an embodiment, the service server 1700 may provide the user terminal 1501 with a specified service (e.g., ordering food or booking a hotel). According to an embodiment, the service server 1700 may be a server operated by the third party. According to an embodiment, the service server 1700 may provide the intelligent server 1600 with information for generating a plan corresponding to the received user input. The provided information may be stored in the capsule DB 1630. Furthermore, the service server 1700 may provide the intelligent server 1600 with result information according to the plan. The service server 1700 may communicate with the intelligent server 1600 and/or the user terminal 1501 over the network 1599. The service server 1700 may communicate with the intelligent server 1600 through a separate connection. An example is illustrated in FIG. 15 that the service server 1700 is one server, but embodiments of the disclosure are not limited thereto. At least one of the respective services 1701, 1702, and 1703 of the service server 1700 may be implemented with a separate server.

In the above-described integrated intelligence system, the user terminal 1501 may provide the user with various intelligent services in response to a user input. The user input may include, for example, an input through a physical button, a touch input, or a voice input.

According to an embodiment, the user terminal 1501 may provide a speech recognition service via an intelligent app (or a speech recognition app) stored therein. In this case, for example, the user terminal 1501 may identify a user utterance or a voice input, which is received via the microphone, and may provide the user with a service corresponding to the identified voice input.

According to an embodiment, the user terminal 1501 may perform a specified action, based on the received voice input, independently, or together with the intelligent server and/or the service server. For example, the user terminal 1501 may launch an app corresponding to the received voice input and may perform the specified action via the executed app.

According to an embodiment, when providing a service together with the intelligent server 1600 and/or the service server 1700, the user terminal 1501 may detect a user utterance by using the microphone 1570 and may generate a signal (or voice data) corresponding to the detected user utterance. The user terminal 1501 may transmit the voice data to the intelligent server 1600 by using the communication interface 1590.

According to an embodiment, the intelligent server 1600 may generate a plan for performing a task corresponding to the voice input or the result of performing an action depending on the plan, as a response to the voice input received from the user terminal 1501. For example, the plan may include a plurality of actions for performing the task corresponding to the voice input of the user and/or a plurality of concepts associated with the plurality of actions. The concept may define a parameter to be entered upon executing the plurality of actions or a result value output by the execution of the plurality of actions. The plan may include relationship information between the plurality of actions and the plurality of concepts.

According to an embodiment, the user terminal 1501 may receive the response by using the communication interface 1590. The user terminal 1501 may output the voice signal generated in the user terminal 1501 to the outside by using the speaker 1555 or may output an image generated in the user terminal 1501 to the outside by using the display 1560.

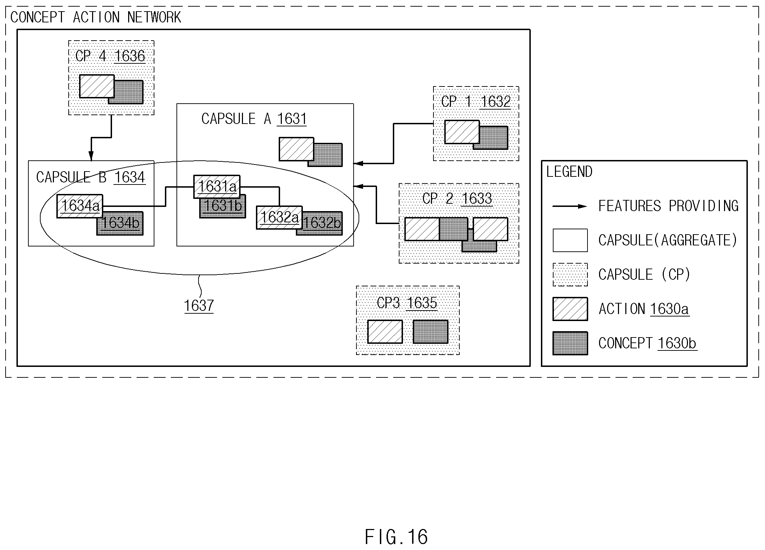

FIG. 16 is a diagram illustrating a form in which relationship information between a concept and an action is stored in a database, according to an embodiment.

A capsule database (e.g., the capsule DB 1630 of FIG. 15) of an intelligent server (e.g., the intelligent server 1600 of FIG. 15) may store a plurality of capsules in a form of a concept action network (CAN). The capsule DB may store an action for processing a task corresponding to a user's voice input and a parameter necessary for the action, in the CAN form. The CAN may indicate an organic relationship between the action and a concept defining the parameter necessary to perform the action.

The capsule DB may store a plurality capsules (a capsule A 1631 and a capsule B 1634) respectively corresponding to a plurality of domains (e.g., applications). According to an embodiment, a single capsule (e.g., the capsule A 1631) may correspond to a single domain (e.g., a location (geo) or an application). In addition, one capsule may correspond to a capsule (e.g., CP 1 1632, CP 2 1633, CP 3 1635, and/or CP 4 1636) of at least one service provider for performing a function for a domain associated with a capsule. According to an embodiment, the one capsule may include at least one or more actions 1630a and at least one or more concepts 1630b for performing a specified function.

The natural language platform (e.g., the natural language platform 1620 of FIG. 15) may generate a plan for performing a task corresponding to the received voice input by using the capsule stored in the capsule DB 1630. For example, a planner module (e.g., the planner module 1625 of FIG. 15) of the natural language platform may generate a plan by using the capsule stored in the capsule DB. For example, a plan 1637 may be generated by using actions 1631a and 1632a and concepts 1631b and 1632b of the capsule A 16310 and an action 1634a and a concept 1634b of the capsule B 1634.

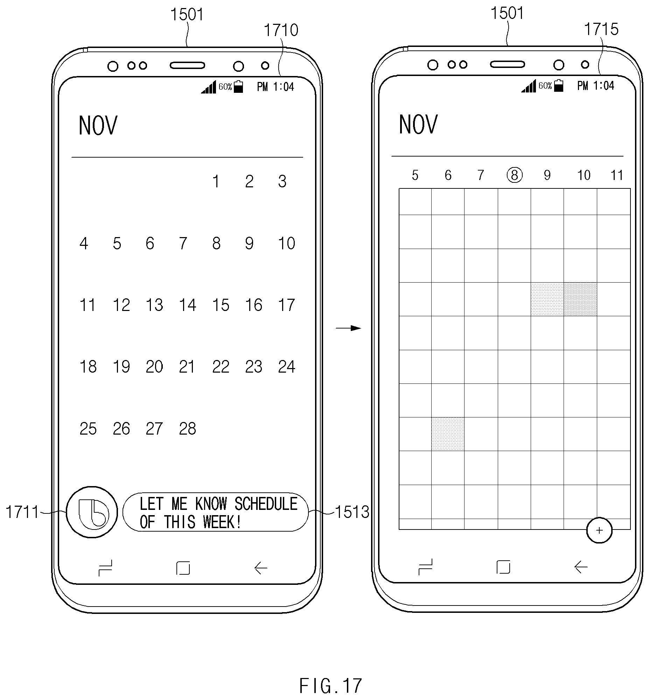

FIG. 17 is a view illustrating a screen in which a user terminal processes a voice input received through an intelligent app, according to an embodiment.

The user terminal 1501 may execute an intelligent app to process a user input through the intelligent server (e.g., the intelligent server 1600 of FIG. 15).

According to an embodiment, on first screen 1710, when recognizing a specified voice input (e.g., wake up!) or receiving an input via a hardware key (e.g., a dedicated hardware key), the user terminal 1501 may launch an intelligent app for processing a voice input. For example, the user terminal 1501 may launch the intelligent app in a state where a schedule app is executed. According to an embodiment, the user terminal 1501 may display an object (e.g., an icon 1711) corresponding to the intelligent app, in a display (e.g., the display 1560 of FIG. 15). According to an embodiment, the user terminal 1501 may receive a voice input by a user utterance. For example, the user terminal 1501 may receive a voice input saying that "Let me know the schedule of this week!". According to an embodiment, the user terminal 1501 may display a user interface (UI) 1513 (e.g., an input window) of the intelligent app, in which text data of the received voice input is displayed, on the display 1560.

According to an embodiment, on second screen 1715, the user terminal 1501 may display a result corresponding to the received voice input, on the display 1560. For example, the user terminal 1501 may receive a plan corresponding to the received user input and may display "the schedule of this week" on the display 1560 depending on the plan.

The electronic device according to various embodiments disclosed in the disclosure may be various types of devices. The electronic device may include, for example, a portable communication device (e.g., a smartphone), a computer device, a portable multimedia device, a mobile medical appliance, a camera, a wearable device, or a home appliance. An electronic device according to an embodiment of this specification may not be limited to the above-described electronic devices.

Various embodiments of the disclosure and terms used herein are not intended to limit the technical features described in the disclosure to specific embodiments, and it should be understood that the embodiments and the terms include modification, equivalent, or alternative on the corresponding embodiments described herein. With regard to description of drawings, similar or related components may be marked by similar reference marks/numerals. The singular form of the noun corresponding to an item may include one or more of items, unless interpreted otherwise in context. In the disclosure, the expressions "A or B", "at least one of A and B", "at least one of A or B", "A, B, or C", "at least one of A, B, and C", and "at least one of A, B, or C" may include any and all combinations of one or more of the associated listed items. The terms, such as "first" or "second" may be used to simply distinguish the corresponding component from the other component, but do not limit the corresponding components in other aspects (e.g., importance or order). When a component (e.g., a first component) is referred to as being "coupled with/to" or "connected to" another component (e.g., a second component) with or without the term of "operatively" or "communicatively", it may mean that a component is connectable to the other component, directly (e.g., by wire), wirelessly, or through the third component.

In various embodiments of the disclosure, the term "module" used herein may include a unit, which is implemented with hardware, software, or firmware, and may be interchangeably used with the terms "logic", "logical block", "part", or "circuit". The "module" may be a minimum unit of an integrated part or may be a minimum unit of the part for performing one or more functions or a part thereof. For example, according to an embodiment, the module may be implemented in the form of an application-specific integrated circuit (ASIC).

Various embodiments of the disclosure may be implemented with software (e.g., program 1440) including one or more instructions stored in a storage medium (e.g., the embedded memory 1436 or the external memory 1438) readable by a machine (e.g., the electronic device 1401). For example, the processor (e.g., the processor 1420) of the machine (e.g., the electronic device 1401) may call at least one instruction of the stored one or more instructions from a storage medium and then may execute the at least one instruction. This enables the machine to operate to perform at least one function depending on the called at least one instruction. The one or more instructions may include a code generated by a complier or a code executable by an interpreter. The machine-readable storage medium may be provided in the form of a non-transitory storage medium. Herein, 'non-transitory' just means that the storage medium is a tangible device and does not include a signal (e.g., electromagnetic waves), and this term does not distinguish between the case where data is semipermanently stored in the storage medium and the case where the data is stored temporarily.

According to an embodiment, a method according to various embodiments disclosed herein may be provided to be included in a computer program product. The computer program product may be traded between a seller and a buyer as a product. The computer program product may be distributed in the form of a machine-readable storage medium (e.g., compact disc read only memory (CD-ROM)) or may be distributed (e.g., downloaded or uploaded), through an application store (e.g., PlayStore^{™}), directly between two user devices (e.g., smartphones), or online. In the case of online distribution, at least part of the computer program product may be at least temporarily stored in the machine-readable storage medium such as the memory of a manufacturer's server, an application store's server, or a relay server or may be generated temporarily.

According to various embodiments, each component (e.g., a module or a program) of the above-described components may include a single entity or a plurality of entities, and some of the plurality of objects may be separately arranged on other components. According to various embodiments, one or more components of the above-described components or operations may be omitted, or one or more other components or operations may be added. Alternatively or additionally, a plurality of components (e.g., a module or a program) may be integrated into one component. In this case, the integrated component may perform one or more functions of each component of the plurality of components in the manner same as or similar to being performed by the corresponding component of the plurality of components prior to the integration. According to various embodiments, operations executed by modules, programs, or other components may be executed by a successive method, a parallel method, a repeated method, or a heuristic method. Alternatively, at least one or more of the operations may be executed in another order or may be omitted, or one or more operations may be added.

[INDUSTRIAL APPLICABILITY]

## Claims

1. An electronic device comprising:
a communication circuit;
a memory; and
a processor,
wherein the processor is configured to:
receive a voice input corresponding to a user utterance from a first external device through the communication circuit;
identify, from the voice input, a session corresponding to the user utterance, user intent, and information related to at least one second external device related to an operation corresponding to the user intent;
update at least one of the user intent and the information related to the at least one second external device based on context information related to a pre-stored user utterance history;
generate a command for executing the operation based on the user intent and the information related to the at least one second external device; and
update the context information based on the session, the user intent, and the information related to the at least one second external device.

2. The electronic device of claim 1, wherein the user utterance history includes at least one of session information, user intent information, execution device information, time information, and location information for each user utterance.

3. The electronic device of claim 1, wherein the processor is configured to:
determine whether at least one user utterance history corresponding to the same session as the user utterance is present in the context information, based on the identified session; and
update at least one of the user intent and the information related to the at least one second external device based at least partly on the determination.

4. The electronic device of claim 3, wherein the processor is configured to:
when the at least one user utterance history corresponding to the same session is present, identify a user utterance history, which includes execution device information matching the information related to the at least one second external device, from among the at least one user utterance history corresponding to the same session; and
update the information related to the at least one second external device based on the matched execution device information included in the identified user utterance history.

5. The electronic device of claim 4, wherein the processor is configured to:
when the user utterance history, which includes the execution device information matching the information related to the at least one second external device, from among the at least one user utterance history corresponding to the same session is not present, not update the information related to the at least one second external device.

6. The electronic device of claim 3, wherein the processor is configured to:
when the at least one user utterance history corresponding to the same session is present, identify a user utterance history, which includes execution device information corresponding to the information related to the at least one second external device and user intent information related to the user intent, from among the at least one user utterance history corresponding to the same session; and
update the user intent based on the user intent information included in the identified user utterance history.

7. The electronic device of claim 6, wherein the processor is configured to:
when the identified user utterance history is a user utterance history, which is last stored, from among the at least one user utterance history, update the user intent; and
when the identified user utterance history is not the user utterance history, which is last stored, from among the at least one user utterance history, not update the user intent.

8. The electronic device of claim 3, wherein the processor is configured to:
when the user utterance history corresponding to the same session is not present,
identify a user utterance history including time information corresponding within a specified first time from a time point of the user utterance, based on time information included in the user utterance history; and
update the user intent or the information related to the at least one second external device based on the user utterance history including the time information corresponding within the specified first time.

9. The electronic device of claim 8, wherein the processor is configured to:
when the user utterance history including the time information corresponding within the specified first time from the time point of the user utterance is not present, identify a user utterance history including time information corresponding within a specified second time from the time point of the user utterance, and location information corresponding within a specified distance from a location of the user utterance; and
update the user intent or the information related to the at least one second external device based on the user utterance history including the time information corresponding within the specified second time, and the location information.

10. The electronic device of claim 1, wherein the processor is configured to:
transmit the command to the at least one second external device or a third external device connected to the at least one second external device.

11. The electronic device of claim 1, wherein the processor is configured to:
when failing to specify the operation or an execution device for performing the operation based on the user intent and the information related to the at least one second external device related to the operation corresponding to the user intent, generate a message for prompting an additional user utterance for specifying the operation or the execution device.

12. A method for providing a voice assistant service for an electronic device, the method comprising:
receiving a voice input corresponding to a user utterance from a first external device;
recognizing, from the voice input, a session corresponding to the user utterance, user intent, and information related to at least one second external device related to an operation corresponding to the user intent;
updating at least one of the user intent and the information related to the at least one second external device based on context information related to a pre-stored user utterance history;
generating a command for executing the operation based on the user intent and the information related to the at least one second external device; and
updating the context information based on the session, the user intent, and the information related to the at least one second external device.

13. The method of claim 12, wherein the user utterance history includes at least one of session information, user intent information, execution device information, time information, and location information for each user utterance.

14. The method of claim 12, wherein the updating of the at least one of the user intent and the information related to the at least one second external device includes:
determining whether at least one user utterance history corresponding to the same session as the user utterance is present in the context information, based on the identified session; and
updating at least one of the user intent and the information related to the at least one second external device based at least partly on the determination.

15. The method of claim 12, further comprising:
when failing to specify the operation or an execution device for performing the operation based on the user intent and the information related to the at least one second external device related to the operation corresponding to the user intent, generating a message for prompting an additional user utterance for specifying the operation or the execution device.
